# EUROPEAN PATENT SPECIFICATION

(11) **EP 2 369 329 B1**
(45) Date of publication and mention of the grant of the patent: **08.07.2015**
(21) Application number: 11154486.2
(22) Date of filing: 15.02.2011
(51) Int. Cl.: G01N 23/04, H01L 21/66

(54) **X-ray inspection apparatus and x-ray inspection method**
Röntgenstrahlinspektionsvorrichtung und Röntgenstrahlinspektionsmethode
Appareil d'inspection par rayons x et méthode d'inspection par rayons x

(30) Priority: 15.03.2010 JP 2010057540
(43) Date of publication of application: 28.09.2011
(73) Proprietor: OMRON Corporation, Shiokoji-dori, Shimogyo-Ku Kyoto-shi Kyoto 600-8530 (JP)
(72) Inventor: Sugita, Shinji, Kyoto 600-8530 (JP); Masuda, Masayuki, Kyoto 600-8530 (JP); Murakami, Kiyoshi, Kyoto 600-8530 (JP)
(74) Representative: Horn Kleimann Waitzhofer Patentanwälte PartG mbB

(56) References cited:
- EP-A1- 0 683 389
- GB-A- 2 439 413
- US-A1- 2003 113 009
- US-A1- 2005 074 088
- US-A1- 2007 177 136
- US-B1- 7 635 843

## Description

### BACKGROUND OF THE INVENTION

### 1. TECHNICAL FIELD

The present invention relates to technology for performing inspection with X-rays, and in particular relates to an X-ray inspection apparatus and an X-ray inspection method for performing inspection by high-speed imaging, and imaging for analysis in accordance with the inspection results.

### 2. RELATED ART

In a board exterior inspection apparatus for inspecting the solder connections of a printed circuit board, the solder connections of parts classified as being "poor" as a result of automatic inspection are analyzed with use of a magnifier means such as a microscope.

As one example of technology related to board inspection, Patent Document 1 discloses an inspection method that employs vertical slice imaging. Patent Document 2 discloses technology for efficiently inspecting an object by performing image processing based on void geometry.

### [Related Art Documents]

### [Patent Documents]

[Patent Document 1] Japanese Published Patent Application No. 2008-216265 [Patent Document 2] Japanese Published Patent Application No. 2009-198463 EP 0 683 389 A1 discloses a laminoaraph, including a radiation source for generating radiation towards a subject, a radiation surface sensor device with a two-dimensional resolution, fitted opposite to the radiation source for detecting the radiation from the radiation source which has passed through the subject, a scanning device for moving the subject to take a plurality of different positions between the radiation source and the radiation surface sensor device and for scanning the subject in each of the different positions by the radiation from the radiation source. The laminograph further includes a data collection device for collecting the plurality of outputs of the radiation surface sensor device during the scanning by the scanning device to obtain the plurality of radioaraphic images of the subject in the different positions, a position measurement device for measuring multiple positions of a focal plane at multiple places of the subject, a displacement measurement device for measuring multiple displacement based on the multiple positions of the focal plane measured by the position measurement device, and an image processing device for adding and averaging the plurality of radiographic images with the displacements to obtain a radiographic image of the subject focused on the focal plane as a topographic image of the subject.

US 2003/0113009 A1 discloses a circuit board inspection system incorporating a technique that confirms observed electrical connection defects. The improved circuit board inspection system applies a localized investigative routine upon portions of a printed circuit board having one or more identified defects. The technique accounts for the slope of a portion under test of the printed circuit board and provides results that are more accurate from inspection systems that report electrical connection defects. GB 2 439 413 A discloses a cargo security inspection method based on spiral scanning, the method comprising: spirally scanning an inspected object at a first precision to obtain the transmission projection data; judging whether there is a suspect area in the inspected area; scanning at least one slice of said suspect area at a second precision wherein the second precision is greater than the first precision; and, reconstructing a topographic image of said at least one slice, and using the reconstructed topographic image to judge whether there is any dangerous article in the suspect area.

### SUMMARY

However, in the case where the solder connections of a BGA (Ball Grid Array), a CSP (Chip Size Package) or the like, which cannot be optically inspected with visible light from the exterior, are automatically inspected by an X-ray inspection apparatus, locations that have been determined as being poor cannot be observed with a visible-light optical means such as a microscope. Accordingly, analysis requires an X-ray analysis apparatus for observing cross-sections or performing detailed analysis.

The present invention has been achieved in order to address problems such as that described above, and an object thereof is to provide an X-ray inspection apparatus that enables detailed analysis to be performed without lowering inspection efficiency.

Another object of the present invention is to provide an X-ray inspection method that enables detailed analysis to be performed without lowering inspection efficiency.

In order to address the above-described problem, one aspect of the present invention provides an X-ray inspection apparatus for executing a process for reconstructing a tomographic image of an inspection target region of an object by receiving X-rays that have passed through the inspection target region with a plurality of detection surfaces. The X-ray inspection apparatus includes: a normal condition storage unit for storing a normal operating condition, which is an operating condition of the X-ray inspection apparatus and is used for inspecting the object; a re-inspection condition storage unit for storing one or more re-inspection operating conditions, which are for use in re-inspection in a case where the object is a poor product and are different from the normal operating condition; an X-ray detection mechanism for imaging with the plurality of detection surfaces; an X-ray output unit for outputting X-rays such that the X-rays that have passed through the inspection target region are incident on the X-ray detection mechanism at one of the detection surfaces; and a control unit for controlling operation of the X-ray inspection apparatus. The control unit includes: a determination unit for determining whether the object is a good product or a poor product based on the normal operating condition; and an analysis operation control unit for, in a case where the object is a poor product, switching an operating condition of the X-ray inspection apparatus from the normal operating condition to the one or more re-inspection operating conditions, and controlling operation of the X-ray inspection apparatus based on the one or more re-inspection operating conditions. The one or more re-inspection operating conditions include an X-ray irradiation angle, which is changed from an X-ray irradiation angle included in the normal operating condition. The X-ray inspection apparatus may further include an X-ray detection mechanism moving unit for moving the X-ray detection mechanism. Also, the X-ray inspection apparatus may further include an object moving unit for moving the object.

Preferably, the one or more re-inspection operating conditions are each prescribed according to a type of defect to be re-inspected on the object. Preferably, the analysis operation control unit controls operation of the X-ray inspection apparatus under the each of the one or more re-inspection operating conditions that is based on the type of defect.

Preferably, in order for the X-ray detection mechanism to acquire an image with a higher enlargement ratio than that of an image captured under the normal operating condition, the analysis operation control unit controls operation of the X-ray inspection apparatus so as to change a distance between the X-ray detection mechanism and the object moving unit or a distance between the X-ray output unit and the object moving unit.

Preferably, in order to acquire a higher number of images than the number of images acquired under the normal operating condition, the analysis operation control unit controls operation of the X-ray inspection apparatus so as to perform imaging at a higher number of positions than the number of positions at which imaging is performed under the normal operating condition.

Preferably, the analysis operation control unit controls operation of the X-ray inspection apparatus so as to change an X-ray irradiation angle in accordance with a reference determined in advance according to a cause of a defect in the object.

Preferably, the analysis operation control unit controls operation of the X-ray inspection apparatus so as to change a path of the object and the X-ray detection mechanism from a first path that has been determined in advance with respect to the normal operating condition to a second path that has been determined in advance as one of the one or more re-inspection operating conditions.

Preferably, in order to obtain a higher contrast than the contrast of an image acquired under the normal operating condition, the analysis operation control unit controls operation of the X-ray inspection apparatus so as to adjust a tube voltage, a tube current, or an exposure time based on the one or more re-inspection operating conditions.

Preferably, the analysis operation control unit controls operation of the X-ray inspection apparatus such that imaging is performed with an X-ray focal point diameter that has been switched from a first focal point diameter that has been determined in advance as the normal operating condition to a second focal point diameter that has been determined in advance as one of the one or more re-inspection operating conditions and furthermore is smaller than the first focal point diameter.

Preferably, the X-ray inspection apparatus further includes: a reconstruction unit for reconstructing an image obtained by X-ray imaging. Preferably, the control unit further includes: an algorithm changing unit for changing an algorithm for reconstructing an image from a first algorithm used for reconstructing an image under the normal operating condition to a second algorithm used for reconstructing an image under the one or more re-inspection operating conditions.

Preferably, the X-ray inspection apparatus further includes: a display unit for displaying a result regarding an object determined as being a poor product under the normal operating condition and an image captured under the one or more re-inspection operating conditions with respect to a location at which the object was determined as being the poor product.

According to another embodiment, the present invention provides an X-ray inspection method for causing a computer that functions as an X-ray inspection apparatus to execute a process for reconstructing a tomographic image of an inspection target region of an object by receiving X-rays that have passed through the inspection target region with a detection surface. This method includes the steps of: loading a normal operating condition used for inspecting the object into a memory of the computer; and loading, into the memory, one or more re-inspection operating conditions that are for use in re-inspection in a case where the object is a poor product and that are different from the normal operating condition. The one or more re-inspection operating conditions are each prescribed according to a type of defect targeted for inspection. This method further includes the steps of: outputting X-rays such that the X-rays that have passed through the inspection target region are incident on an X-ray detection mechanism for imaging with the detection surface at an imaging position; and controlling operation of the X-ray inspection apparatus. The controlling operation step includes the steps of: determining whether the object is a good product or a poor product based on the normal operating condition; and switching, in a case where the object is a poor product, an operating condition of the X-ray inspection apparatus from the normal operating condition to the one or more re-inspection operating conditions, and controlling operation of the X-ray inspection apparatus based on the one or more re-inspection operating conditions. The one or more re-inspection operating conditions include an X-ray irradiation angle, which is changed from an X-ray irradiation angle included in the normal operating condition.

Preferably, this method further includes the step of: reconstructing an image obtained by X-ray imaging. Preferably, the controlling operation step further includes the step of: changing an algorithm from a first algorithm used for reconstructing an image under the normal operating condition to a second algorithm used for reconstructing an image under the one or more re-inspection operating conditions.

Preferably, this method further includes the step of: displaying a result regarding an object determined as being a poor product under the normal operating condition and an image captured under the one or more re-inspection operating conditions with respect to a location at which the object was determined as being the poor product.

Note that in the above-described aspects of the present invention, the operating conditions include imaging conditions, an image reconstruction processing algorithm, and an object inspection reference. The imaging conditions include at least one condition among conditions such as an X-ray irradiation angle, an object movement path, an X-ray detection mechanism movement path, and the number of images.

Examples of the target of inspection include, but are not limited to, the wetting state, the existence of a void, the existence of shift, and bridges, and other inspection is also possible.

### BRIEF DESCRIPTION OF THE DRAWINGS

FIG. 1 is a schematic block diagram of an X-ray inspection apparatus 100 according to a first embodiment;
FIG. 2 is a diagram illustrating a configuration of the X-ray inspection apparatus 100;
FIG. 3 is a flowchart showing an overview of processing performed by the X-ray inspection apparatus 100;
FIG. 4 is a first flowchart showing details of processing performed by the X-ray inspection apparatus 100;
FIG. 5 is a second flowchart showing details of processing performed by the X-ray inspection apparatus 100;
FIG. 6 is a diagram showing an operating condition setting screen for wetting inspection, void inspection, shift inspection, and bridge inspection;
FIG. 7 is a diagram showing inspection target regions;
FIG. 8 is a diagram showing a configuration of an analysis mode setting table 800 stored in a storage unit 90;
FIG. 9 is a diagram conceptually showing one aspect of how data is stored in the storage unit 90;
FIG. 10 is a flowchart showing a procedure of processing executed by an arithmetic unit 70;
FIGS. 11A and 11B are diagrams showing operating conditions of the X-ray inspection apparatus 100 in the case of raising the imaging magnification ratio;
FIGS. 12A and 12B are diagrams showing how the number of images is increased in order to perform defect analysis;
FIGS. 13A to 13C are diagrams showing how the irradiation angle is changed in order to perform imaging for defect analysis;
FIGS. 14A and 14B are diagrams illustrating the irradiation angle of X-rays in void inspection;
FIG. 15 is a diagram showing an image obtained by high-speed inspection and an image obtained by defect inspection side-by-side;
FIGS. 16A and 16B are diagrams showing the correspondence between irradiation at a prescribed irradiation angle and irradiation at a higher irradiation angle than the prescribed irradiation angle;
FIG. 17 is a diagram showing tomographic images of the center of a ball obtained by high-speed inspection and defect analysis inspection and tomographic images of a bond surface obtained by high-speed inspection and defect analysis inspection;
FIGS. 18A and 18B show paths in the case where imaging points are in a lattice configuration and in an oblique lattice configuration respectively; and
FIG. 19 is a flowchart showing processing performed using an X-ray inspection apparatus 100 according to a second embodiment.

### DETAILED DESCRIPTION

The following is a description of embodiments of the present invention with reference to the drawings. In the following description, the same reference signs have been given to portions that are the same. The names and functions of such portions are also the same. Accordingly, redundant detailed descriptions thereof will not be given. Also, it is assumed in this description that the X axis, the Y axis, and the Z axis refer to axes that are orthogonal to each other.

### First embodiment

### <Overview of configuration>

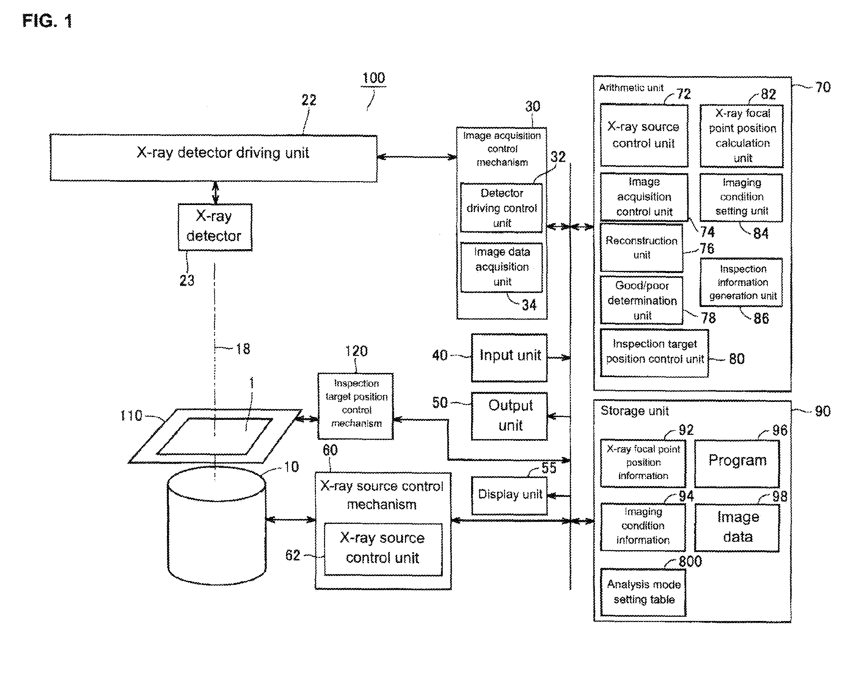

Below is a description of the configuration of an X-ray inspection apparatus 100 according to a first embodiment with reference to FIG. 1. FIG. 1 is a schematic block diagram of the X-ray inspection apparatus 100 according to the present embodiment.

The X-ray inspection apparatus 100 includes an X-ray source 10 that outputs X-rays 18, an X-ray detector 23, an image acquisition control mechanism 30, and an inspection target position driving mechanism 110 that moves the position of an inspection target 1. The X-ray inspection apparatus 100 further includes an input unit 40, an output unit 50, a display unit 55, an X-ray source control mechanism 60, an inspection target position control mechanism 120, an arithmetic unit 70, and a storage unit 90.

The inspection target 1 is arranged between the X-ray source 10 and the X-ray detector 23. In the present embodiment, the inspection target 1 is assumed to be a circuit board on which a part is mounted. Note that although the X-ray source 10, the inspection target 1, and the X-ray detector 23 are disposed from bottom to top in the stated order in FIG. 1, a configuration is possible in which these members are arranged in the order of the X-ray detector 23, then the inspection target 1, and then the X-ray source 10 from bottom to top in consideration of X-ray source maintainability.

The X-ray source 10, which is an X-ray output unit, irradiates the inspection target 1 with X-rays 18 under control of the X-ray source control mechanism 60. In the present embodiment, the inspection target 1 is assumed to be a board on which circuit parts are mounted.

The inspection target 1 is moved by the inspection target position driving mechanism 110, which is an object moving unit. The specific configuration of the inspection target position driving mechanism 110 will be described later. The inspection target position control mechanism 120 controls the operation of the inspection target position driving mechanism 110 based on an instruction from the arithmetic unit 70.

The X-ray detector 23, which is an X-ray detection mechanism, is a two-dimensional X-ray detector that generates an image by detecting X-rays that have been output from the X-ray source 10 and passed through the inspection target 1. An I.I. (Image Intensifier) tube, an FPD (Flat Panel Detector), or the like can be used as the X-ray detector 23. In consideration of installation space, it is desirable that an FPD is used as the X-ray detector 23. Also, in order to be able to be used in inline inspection, it is desirable that the X-ray detector 23 has high sensitivity, and it is particularly desirable that a direct conversion FPD that employs a CdTe element or the like is used as the X-ray detector 23. In another aspect, the X-ray inspection apparatus 100 may include a plurality of X-ray detectors 23.

The image acquisition control mechanism 30 includes a detector driving control mechanism 32 and an image data acquisition unit 34. Based on an instruction from the arithmetic unit 70, the detector driving control mechanism 32 moves the X-ray detector 23 by controlling the operation of the X-ray detector driving unit 22, which is an X-ray detection mechanism moving unit. The image data acquisition unit 34 acquires, from the X-ray detector 23, image data that has been designated by the arithmetic unit 70.

The input unit 40 receives, for example, an input of an instruction from a user.

The input unit 40 includes a device for receiving an input of a user operation (e.g., a keyboard, a mouse, or a touch panel), or an interface for receiving an input of a signal that has been transmitted from outside the X-ray inspection apparatus 100 via a network (not shown).

The output unit 50 includes an interface for outputting inspection results or the like to the outside. The interface includes, for example, an interface for network communication.

The display unit 55 displays inspection results and the like. In one aspect, the display unit 55 displays results pertaining to an inspection target determined as being poor under normal operating conditions, and an image captured under re-inspection operating conditions with respect to the location where the inspection target was determined as being poor under normal operating conditions. In the present embodiment, the display unit 55 is a display for displaying an X-ray image or the like that has been constructed by the arithmetic unit 70.

Specifically, the user can perform various types of input operations via the input unit 40, and various types of arithmetic results obtained by processing performed by the arithmetic unit 70 are displayed by the display unit 55. An image to be displayed by the display unit 55 may be output for visual good/poor determination by the user, or may be output as a good/poor determination result made by a good/poor determination unit 78 that will be described later.

The X-ray source control mechanism 60 includes an X-ray source control unit 62 that controls the output of the X-ray source. The X-ray source control unit 62 receives designations of an X-ray focal point and X-ray output conditions (tube voltage, tube current, and output timing) from the arithmetic unit 70. The designated X-ray output conditions depend on the configuration of the inspection target.

The arithmetic unit 70 controls various units by executing a program 96 stored in the storage unit 90, and executes predetermined arithmetic processing. The arithmetic unit 70 includes an X-ray source control unit 72, an image acquisition control unit 74, a reconstruction unit 76, the good/poor determination unit 78, an inspection target position control unit 80, an X-ray focal point calculation unit 82, an imaging condition setting unit 84, and an inspection information generation unit 86.

The X-ray source control unit 72 determines the X-ray focal point and X-ray output conditions, and sends a command to the X-ray source control unit 62.

The image acquisition control unit 74 sends a command to the image acquisition control mechanism 30 so as to cause the X-ray detector 23 to acquire an image. The image acquisition control unit 74 also acquires image data from the image acquisition control mechanism 30.

The reconstruction unit 76 reconstructs three-dimensional data from a plurality of image data pieces acquired by the image acquisition control unit 74.

The good/poor determination unit 78 obtains the height of the board surface on which a part is mounted (board height), and determines whether the inspection target is good or poor based on a tomographic image taken at the board height. Note that since the algorithm used in the good/poor determination or the information input to the algorithm depend on the inspection target, the good/poor determination unit 78 acquires the algorithm and the input information from imaging condition information 94.

The inspection target position control unit 80 controls the inspection target position driving mechanism 110 via the inspection target position control mechanism 120.

When a certain inspection area of the inspection target 1 is to be inspected, the X-ray focal point calculation unit 82 calculates an X-ray focal point, an irradiation angle, and the like with respect to that inspection area.

The imaging condition setting unit 84 sets conditions (e.g., the imaging time and the application voltage with respect to the X-ray source) when X-rays are to be output from the X-ray source 10, according to the inspection target 1.

The storage unit 90 includes X-ray focal point information 92, the imaging condition information 94, the program 96 executed by the above-described arithmetic unit 70 for realizing various functions, and image data 98 that has been captured by the X-ray detector 23. The X-ray focal point information 92 includes an X-ray focal point calculated by the X-ray focal point calculation unit 82. The imaging condition information 94 includes imaging conditions set by the imaging condition setting unit 84 and information regarding the algorithm to be used in the good/poor determination.

The storage unit 90 can be any element that can accumulate data. The storage unit 90 is configured by, for example, a storage apparatus such as a RAM (Random Access Memory), an EEPROM (Electrically Erasable and Programmable Read-Only Memory), or an HDD (Hard Disk Drive).

In one embodiment, the storage unit 90 stores normal imaging conditions used for inspecting the inspection target 1, and re-inspection imaging conditions used for re-inspection if the inspection target 1 is a poor product. That is to say, the storage unit 90 serves as, or includes, a normal condition storage unit for storing a normal (or standard) operating condition, which is an operating condition of the X-ray inspection apparatus and is used for inspecting the object, and a re-inspection condition storage unit for storing one or more re-inspection operating conditions, which are for use in re-inspection in a case where the object is a poor (or defective) product and are different from the normal operating condition. The arithmetic unit 70 determines whether the inspection target 1 is a good product or a poor product based on the normal imaging conditions, and in the case where the inspection target 1 is a poor product, switches the operating conditions of the X-ray inspection apparatus from the normal imaging conditions to the re-inspection imaging conditions, and controls the operation of the X-ray inspection apparatus based on the re-inspection imaging conditions. Accordingly, the arithmetic unit 70 is a control unit including a determination unit for determining whether the object is a good product or a poor product based on the normal operating condition, and an analysis operation control unit for, in a case where the object is a poor product, switching an operating condition of the X-ray inspection apparatus from the normal operating condition to the one or more re-inspection operating conditions, and controlling operation of the X-ray inspection apparatus based on the one or more re-inspection operating conditions.

Preferably, the arithmetic unit 70 controls the operation of the X-ray inspection apparatus 100 so as to change the distance between the X-ray detector 23 and the inspection target position driving mechanism 110, or the distance between the X-ray source 10 and the inspection target position driving mechanism 110, to let the X-ray detector 23 acquire an image having a higher enlargement ratio than that of an image captured under the normal imaging conditions.

Preferably, in order to acquire a higher number of images than the number of images acquired under the normal imaging conditions, the arithmetic unit 70 controls the operation of the X-ray inspection apparatus 100 so as to perform imaging at a higher number of positions than the number of positions at which imaging is performed under the normal imaging conditions.

Preferably, the arithmetic unit 70 controls the operation of the X-ray inspection apparatus 100 so as to change the X-ray irradiation angle in accordance with a reference that has been determined in advance according to the cause of the defect in the inspection target 1.

Preferably, the arithmetic unit 70 controls the operation of the X-ray inspection apparatus 100 so as to change the path of the inspection target 1 and the X-ray detector 23 from a first path that has been determined in advance with respect to the normal imaging conditions to a second path that has been determined in advance as a re-inspection imaging condition.

Preferably, in order to obtain a higher contrast than the contrast of an image acquired under the normal imaging conditions, the arithmetic unit 70 controls the operation of the X-ray inspection apparatus 100 so as to adjust the tube voltage, the tube current, or the exposure time based on the re-inspection imaging conditions.

Preferably, the arithmetic unit 70 controls the operation of the X-ray inspection apparatus 100 such that imaging is performed using an X-ray focal point diameter that has been switched from a first focal point diameter determined in advance as a normal imaging condition to a second focal point diameter determined in advance as a re-inspection imaging condition and furthermore is smaller than the first focal point diameter.

Preferably, the arithmetic unit 70 is configured so as to reconstruct an image obtained by X-ray imaging. The arithmetic unit 70 is configured so as to change the algorithm from a first algorithm used for reconstructing an image under the normal imaging conditions to a second algorithm used for reconstructing an image under the re-inspection imaging conditions.

Note that the configuration of the X-ray inspection apparatus 100 is not limited to the configuration shown in FIG. 1, and as described later, can be any apparatus that can switch between imaging conditions for normal inspection and imaging conditions for defect analysis when performing imaging.

### <Specific configuration>

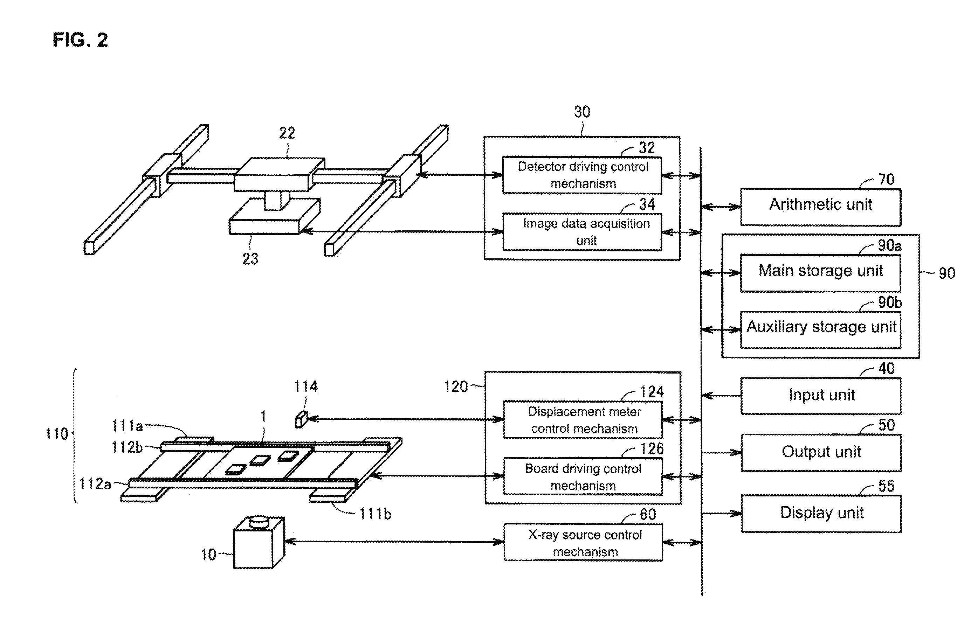

Below is a description of a specific configuration of the X-ray inspection apparatus 100 according to the present embodiment with reference to FIG. 2. FIG. 2 is a diagram illustrating the configuration of the X-ray inspection apparatus 100 according to the present embodiment. Note that in FIG. 2, portions that are same as those in FIG. 1 have been given the same reference signs. Also, among the portions shown in FIG. 1, FIG. 2 shows portions directly related to the control of the X-ray focal point position, the control of the X-ray detector position, the control of the inspection target position, and the like.

The X-ray source 10 emits X-rays in accordance with a command received from the arithmetic unit 70 via the X-ray source control mechanism 60.

The X-ray source 10 is a sealed X-ray source, and is mounted either at the top or at the bottom of the X-ray inspection apparatus 100. Note that the target of the X-ray source 10 may be transmissive or reflective. The X-ray source 10 is assumed to be attached to an operation unit (not shown) and to be movable in the perpendicular direction.

The X-ray detector 23 is arranged at a position opposing the X-ray source 10 such that the inspection target 1 (board) is sandwiched therebetween. The X-ray detector 23 generates an image from X-rays irradiated from the X-ray source 10. The X-ray detector 23 is also attached to the X-ray detector driving unit 22. The X-ray detector driving unit 22 is a three-dimensional stage, and can move the X-ray detector 23 in the horizontal direction (e.g., the X-Y axis directions) and the perpendicular direction (e.g., the Z-axis direction).

The inspection target position driving mechanism 110 is disposed between the X-ray source 10 and the X-ray detector 23. The inspection target position driving mechanism 110 includes stages 111 a and 111 b, and board rails 112a and 112b that are respectively attached to the stages 111 a and 111 b. The stages 111 a and 111 b can move the inspection target 1 in the horizontal direction by parallel displacement. The board rails 112a and 112b fix the board by sandwiching the inspection target 1 from above and below respectively.

The operation of the stages 111 a and 111 b and the board rails 112a and 112b is controlled by a board driving control mechanism 126.

As shown in FIG. 2, the X-ray inspection apparatus 100 includes a displacement meter 114. The displacement meter 114 measures the distance to the board. Accordingly, the displacement meter 114 can measure board warpage, which will be described later. In order to prevent the displacement meter 114 from being exposed to X-rays when performing X-ray imaging, a withdrawal mechanism (not shown) can withdraw the displacement meter 114 to a region not irradiated with X-rays.

According to the above configuration, the X-ray inspection apparatus 100 can change the ratio of the distance between the ray source and the board to the distance between the ray source and the X-ray detector 23 (i.e., can change the magnification ratio). As a result, the X-ray inspection apparatus 100 can change the size (and therefore the resolution) at which the inspection target 1 is imaged by the X-ray detector 23.

Also, the X-ray inspection apparatus 100 can move the board and the X-ray detector 23 such that the board can be imaged from various directions. In the present embodiment, three-dimensional data of the inspection target 1 is generated based on the results of performing such imaging from various directions, with use of a three-dimensional data generation technique called CT (Computed Tomography).

Also, in the present embodiment, the X-ray inspection apparatus 100 can be used in inline inspection. In order to be used in inline inspection, the inspection target position driving mechanism 110 further includes a conveying mechanism (not shown) for introducing and discharging boards. A belt conveyor arranged over the board rails is generally used as the conveying mechanism. Alternatively, a rod called a "pusher" may be used as the conveying mechanism. A pusher can move a board by sliding it on the rails.

A general CPU (Central Processing Unit) can be used as the arithmetic unit 70. The storage unit 90 includes a main storage unit 90a and an auxiliary storage unit 90b. As one example, a memory can be used as the main storage unit 90a, and an HDD (Hard Disk Drive) can be used as the auxiliary storage unit 90b. In other words, a general computer can be used as the arithmetic unit 70 and the storage unit 90.

### <Control configuration>

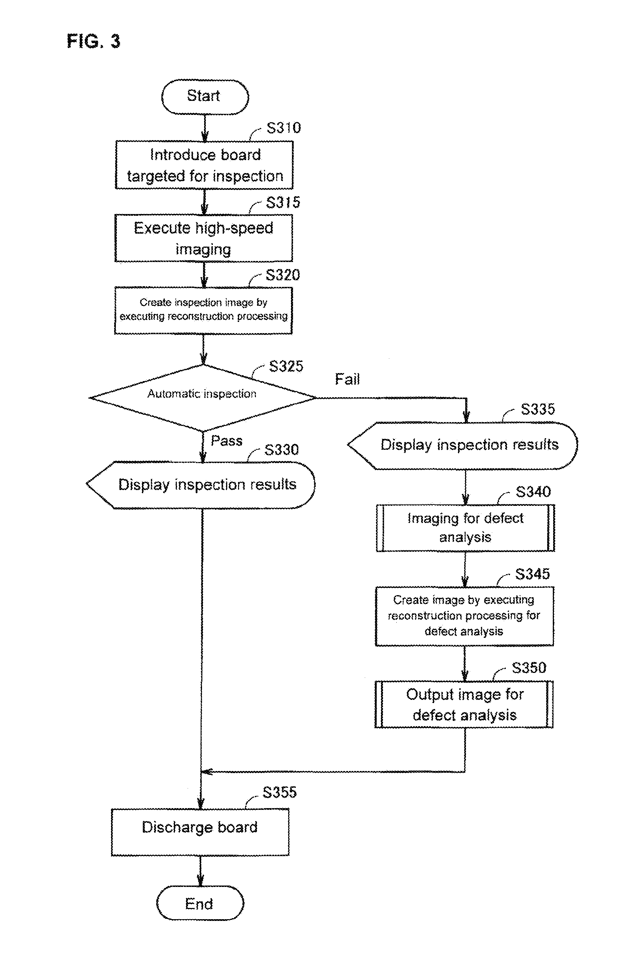

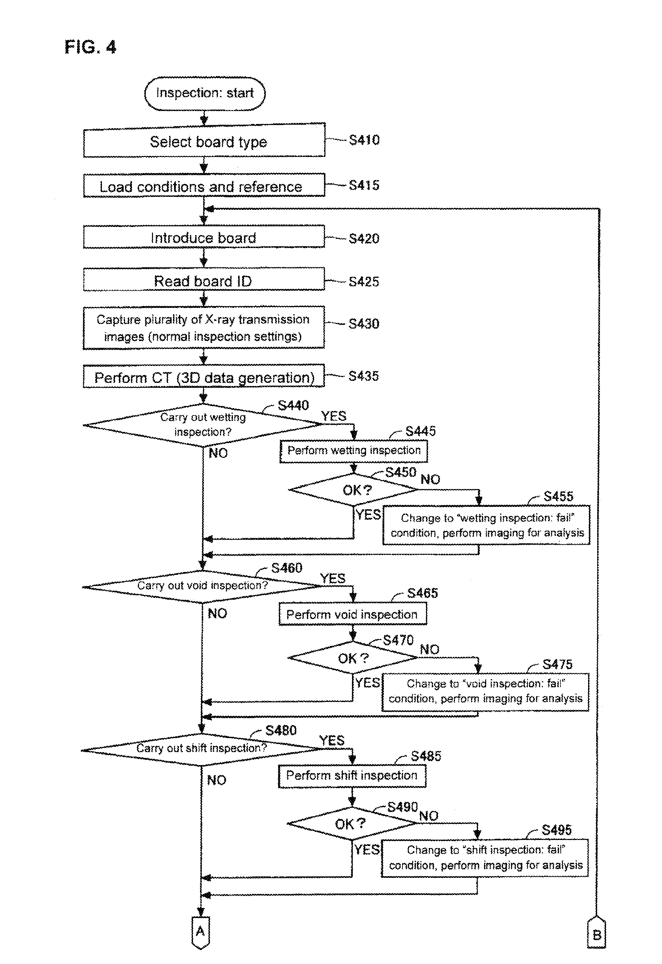

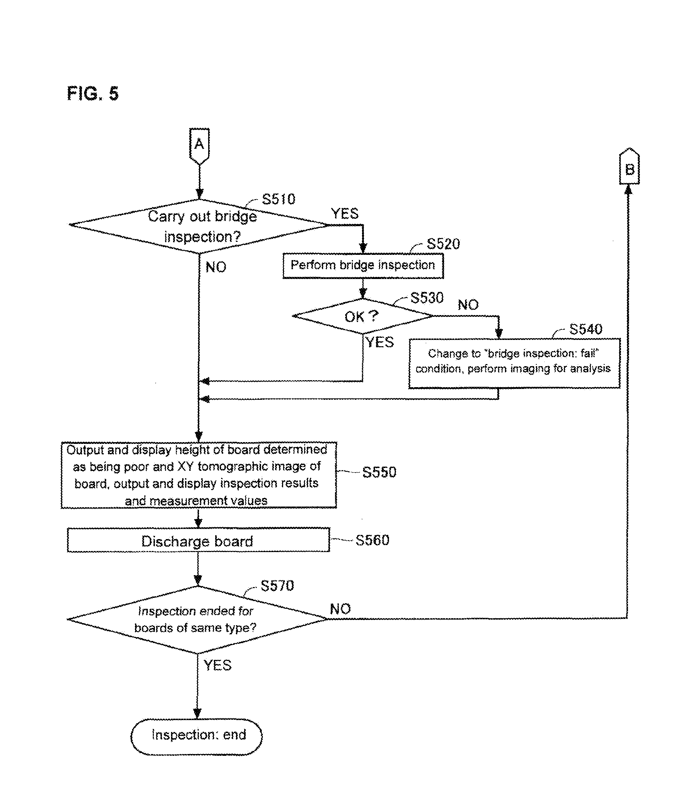

Below is a description of processing performed by the X-ray inspection apparatus 100 according to the present embodiment with reference to FIGS. 3 to 5. FIG. 3 is a flowchart showing an overview of processing performed by the X-ray inspection apparatus 100. FIGS. 4 and 5 are flowcharts showing details of the processing performed by the X-ray inspection apparatus 100.

As shown in FIG. 3, in step S31 0 the X-ray inspection apparatus 100 introduces a board, which serves as the inspection target, from a manufacturing line to a predetermined position. For example, the X-ray inspection apparatus 100 uses the inspection target position driving mechanism 110 to dispose the board at a predetermined position inside the X-ray inspection apparatus 100. If the inspection target is also moved during imaging, the inspection target position driving mechanism 110 arranges the board at a predetermined initial position among a plurality of positions.

In step S315, the arithmetic unit 70 performs high-speed imaging of the board by controlling the X-ray source control mechanism 60 and the image acquisition control mechanism 30. The number of images captured differs according to the board that is the inspection target, and although roughly 32 images, for example, is desirable, a higher or lower number of images may be captured.

In step S320, the arithmetic unit 70 executes, as the reconstruction unit 76, known reconstruction processing using a signal sent from the X-ray detector 23, thus creating an inspection image. The arithmetic unit 70 then writes the created data to the main storage unit 90a. Specifically, the reconstruction unit 76 creates a group of object tomograms (three-dimensional data) by compositing a plurality of X-ray images obtained by high-speed imaging. The reconstruction unit 76 then extracts a tomogram suited for good/poor inspection from the group of tomograms. The tomogram that is extracted may be changed according to the type of defect targeted for inspection. Note that various methods have been proposed for reconstruction processing. As one example, the Feldkamp method can be used, but there is no limitation to this.

In step S325, the arithmetic unit 70 subjects the board to automatic inspection and makes a pass/fail determination as the good/poor determination unit 78. Specifically, the good/poor determination unit 78 subjects the tomogram to an image inspection suited for good/poor inspection, determines whether the target part is good or poor, and detects a defect location (e.g., a coordinate value or a pin number) if the target part has been determined as being poor. A single tomogram may be used, or the good/poor determination may be made based on a comparison of a plurality of tomograms. Specifically, examples of conceivable good/poor determination methods include a method that directly employs three-dimensional data and a method that uses two-dimensional data (a tomographic image) or one-dimensional data (a profile). Such good/poor determination techniques are conventionally known, and therefore it is sufficient to use a good/poor determination technique suited to the inspection item. Accordingly, a redundant detailed description thereof will not be given.

The following describes an example of good/poor determination. Firstly, the good/poor determination unit 78 binarizes the three-dimensional reconstructed image using a certain value. The good/poor determination unit 78 then specifies the position of a part (e.g., a BGA solder ball) in the reconstructed image based on design information such as CAD data. Whether or not the part exists can be determined by calculating the volume of pixels adjacent to the position of the part in the binarized image.

Upon determining that the result of the processing performed on the board is a passing inspection result (PASS in step S325), the arithmetic unit 70 switches the control to step S330. Otherwise (FAIL in step S325), the arithmetic unit 70 switches the control to step S335.

In step S330, the X-ray inspection apparatus 100 causes the display unit 55 to display the inspection results under control of the arithmetic unit 70. For example, the display unit 55 displays the fact that the board is a "good product", the inspection date/time, the lot number to which the board belongs, the processing name, and the like. Note that the data indicating the inspection result may be stored in the storage unit 90. Alternatively, in another aspect, the inspection results may be transmitted to another apparatus that is connected to the X-ray inspection apparatus 100.

In step S335, the X-ray inspection apparatus 100 causes the display unit 55 to display the inspection results under control of the arithmetic unit 70. Specifically, the display unit 55 displays the fact that the board is a "poor product", the inspection date/time, the lot number to which the board belongs, the processing name, and the like. Note that similarly to the case of step S330, the data of the displayed content may be stored in the storage unit 90. Alternatively, in another aspect, the inspection results may be transmitted to another apparatus that is connected to the X-ray inspection apparatus 100.

In step S340, the X-ray inspection apparatus 100 executes imaging for defect analysis. Specifically, with use of any one of various methods described below or a combination thereof, the X-ray inspection apparatus 100 changes the imaging conditions to conditions for re-inspection and performs X-ray imaging based on the changed conditions in order to obtain an image to be used in the generation of a reconstructed image that enables more detailed observation of the characteristics of a portion detected as being poor. The method used in imaging for defect analysis is set by the user of the X-ray inspection apparatus 100. Note that in the case where a plurality of methods are combined, the combination may be set in advance according to the type of board, or may be appropriately selected by the user according to the state of the defect.

As one specific example, the arithmetic unit 70 images the board again by controlling the X-ray source control mechanism 60 and the image acquisition control mechanism 30. At this time, the arithmetic unit 70 executes imaging after having changed the imaging conditions based on data stored in the storage unit 90. Changes in the imaging conditions include changing the X-ray irradiation angle.

In step S345, the arithmetic unit 70 creates an image by executing reconstruction processing for defect analysis with use of the signal obtained by imaging. The arithmetic unit 70 then creates a group of subject tomograms (three-dimensional data) at a location including the portion determined as being poor by compositing a plurality of X-ray images obtained by the imaging for defect analysis (step S340). The processing performed here need not be the same as the processing performed in step S320. For example, it is possible to use an iterative method that is considered to be effective in improving image quality.

In step S350, the arithmetic unit 70 outputs the defect analysis image to the display unit 55.

In step S355, the X-ray inspection apparatus 100 discharges the board from the X-ray inspection apparatus 100 by driving the conveying mechanism (not shown).

As shown in FIG. 4, in step S41 0 the arithmetic unit 70 receives an input for selecting the type of board based on an input operation performed on the input unit 40. Based on the input, the arithmetic unit 70 references data stored in the storage unit 90, and loads conditions corresponding to the selected board type into the main storage unit 90a (step S415).

In step S420, the X-ray inspection apparatus 100 introduces a board. This processing is the same as the processing in step S310.

In step S425, the X-ray inspection apparatus 100 reads the ID (identification) of the introduced board. The ID is located on the surface of the board, for example. The ID is read with use of, for example, a CCD (Charged Coupled Device) camera or other imaging element (not shown) with which the X-ray inspection apparatus 100 is provided. This reading specifies the introduced board, thus enabling comparison with the loaded data. In another aspect, a wireless tag may be used as the ID.

In step S430, the arithmetic unit 70 captures a plurality of X-ray transmission images by driving the X-ray source control mechanism 60 and the image acquisition control mechanism 30. If it is already known that the board to be imaged at this time is a good product, the imaging results are set as the inspection reference. On the other hand, if a board serving as the inspection target has been imaged, the imaging results are used for later-described reconstruction of an image for inspection.

In step S435, the arithmetic unit 70 generates three-dimensional data by executing CT (Computed Tomography).

In step S440, the arithmetic unit 70 determines whether wetting inspection is to be carried out. This determination is made based on, for example, the specific inspection data stored in the storage unit 90. Upon determining that wetting inspection is to be carried out (YES in step S440), the arithmetic unit 70 switches the control to step S445. Otherwise (NO in step S440), the arithmetic unit 70 switches the control to step S460.

In step S445, the arithmetic unit 70 executes wetting inspection using the data obtained in step S435 and the reference data stored in the storage unit 90. The data stored in the storage unit 90 was acquired based on data obtained by performing imaging on a board confirmed in advance as being a good product as described above. In step S450, the arithmetic unit 70 determines whether the board has passed the wetting inspection. If the arithmetic unit 70 determines that the board has passed the wetting inspection (YES in step S450), the arithmetic unit 70 switches the control to step S460. Otherwise (NO in step S450), the arithmetic unit 70 switches the control to step S455.

In step S455, the arithmetic unit 70 changes the operating mode of the X-ray inspection apparatus 100. Specifically, the arithmetic unit 70 changes the operating conditions of the X-ray inspection apparatus 100 to "Wetting inspection: fail". Thereafter, the arithmetic unit 70 executes imaging and inspection to be performed when the inspection target has failed the wetting inspection. Specifically, the arithmetic unit 70 executes the processing shown in steps S335 to S350 (FIG. 3).

In step S460, the arithmetic unit 70 determines whether void inspection is to be carried out on the board based on data stored in the storage unit 90. Upon determining that void inspection is to be carried out (YES in step S460), the arithmetic unit 70 switches the control to step S465. Otherwise (NO in step S460), the arithmetic unit 70 switches the control to step S480.

In step S465, the arithmetic unit 70 executes void inspection. Specifically, the arithmetic unit 70 executes void inspection using the data obtained in step S430 and the data obtained in step S435. In step S470, the arithmetic unit 70 determines whether the board has passed the void inspection. If the arithmetic unit 70 determines that the board has passed the void inspection (YES in step S470), the arithmetic unit 70 switches the control to step S480. Otherwise (NO in step S470), the arithmetic unit 70 switches the control to step S475.

In step S475, the arithmetic unit 70 changes the operating conditions of the X-ray inspection apparatus 100. Specifically, the arithmetic unit 70 changes the imaging conditions (e.g., magnification ratio and position) of the X-ray inspection apparatus 100 to "Void inspection: fail". Thereafter, the X-ray inspection apparatus 100 again executes processing to be performed when the inspection result is that the board has failed. Specifically, the X-ray inspection apparatus 100 executes the processing shown in steps S335 to S350. Thereafter, the arithmetic unit 70 switches the control to step S480.

In step S480, the arithmetic unit 70 determines whether shift inspection is to be carried out with respect to the board. Upon determining that shift inspection is to be carried out (YES in step S480), the arithmetic unit 70 switches the control to step S485. Otherwise (NO in step S480), the arithmetic unit 70 switches the control to step S51 0 (FIG. 5).

In step S485, the arithmetic unit 70 carried out shift inspection. Specifically, the arithmetic unit 70 executes shift inspection based on the data set as the inspection reference (step S430) and the data obtained by actually imaging the inspection target (step S435). In step S490, the arithmetic unit 70 determines whether the board has passed the shift inspection. If the arithmetic unit 70 determines that the board has passed the shift inspection (YES in step S490), the arithmetic unit 70 switches the control to step S510. Otherwise (NO in step S490), the arithmetic unit 70 switches the control to step S495.

In step S495, the arithmetic unit 70 changes the operating conditions of the X-ray inspection apparatus 100. Specifically, the arithmetic unit 70 references an analysis mode setting table 800 and changes the conditions of the X-ray inspection apparatus 100 to "Shift inspection: fail" Thereafter, the X-ray inspection apparatus 100 executes processing to be performed when the inspection result is that the board has failed, in accordance with the changed operating conditions. Specifically, the X-ray inspection apparatus 100 executes the processing shown in steps S335 to S350.

As shown in FIG. 5, in step S51 0 the arithmetic unit 70 determines whether bridge inspection is to be carried out, based on data stored in the storage unit 90. Upon determining that bridge inspection is to be carried out (YES in step S51 0), the arithmetic unit 70 switches the control to step S520. Otherwise (NO in step S510), the arithmetic unit 70 switches the control to step S550.

In step S520, the arithmetic unit 70 carries out bridge inspection. Specifically, the arithmetic unit 70 carries out bridge inspection based on the data set as the inspection reference (step S430) and the data obtained by imaging the inspection target (step S435). In step S530, the arithmetic unit 70 determines whether the board has passed the bridge inspection. If the arithmetic unit 70 determines that the board has passed the bridge inspection (YES in step S530), the arithmetic unit 70 switches the control to step S550. Otherwise (NO in step S530), the arithmetic unit 70 switches the control to step S540.

In step S540, the arithmetic unit 70 changes the operating conditions of the X-ray inspection apparatus 100. Specifically, the arithmetic unit 70 changes the operating conditions of the X-ray inspection apparatus 100 from the normal setting to "Bridge inspection: fail" based on data included in the analysis mode setting table 800. Thereafter, the X-ray inspection apparatus 100 again images the board in accordance with the changed operating conditions. Specifically, the arithmetic unit 70 executes the processing shown in steps S335 to S350. Thereafter, the arithmetic unit 70 switches the control to step S550.

In step S550, the arithmetic unit 70 outputs the height of the board determined as being poor and an XY tomographic image of the board. Specifically, the X-ray inspection apparatus 100 displays the height and the image on the display unit 55. The X-ray inspection apparatus 100 can also output the inspection results, via the output unit 50, to another information processing/communication apparatus (not shown) that is connected to the X-ray inspection apparatus 100. Furthermore, the X-ray inspection apparatus 100 may display the board inspection results and all of the measurement values on the display unit 55, and output such data to the external information processing/communication apparatus via the output unit 50.

In step S560, the X-ray inspection apparatus 100 discharges the board for which inspection has ended by giving a command to the conveying mechanism.

In step S570, the arithmetic unit 70 determines whether processing for boards of the same type has ended. This determination is made by, for example, comparing a number set in advance as the number of inspection targets and the number of boards for which inspection has actually been completed. Upon determining that processing for boards of the same type has ended (YES in step S570), the arithmetic unit 70 ends the inspection. Otherwise (NO in step S570), the arithmetic unit 70 returns the control to step S420. The X-ray inspection apparatus 100 then introduces a board that has not been inspected by driving the conveying mechanism, and again executes X-ray inspection.

Note that in the case where a plurality of types of inspection are performed, as shown in FIGS. 4 and 5, the order in which the types of inspection are performed is not limited to the order described above (wetting inspection, then void inspection, then shift inspection, and then bridge inspection). Also, inspection employing tomographic images is not limited to the inspection shown in FIGS. 4 and 5. In such a case, new inspection can be added between steps S435 and S550.

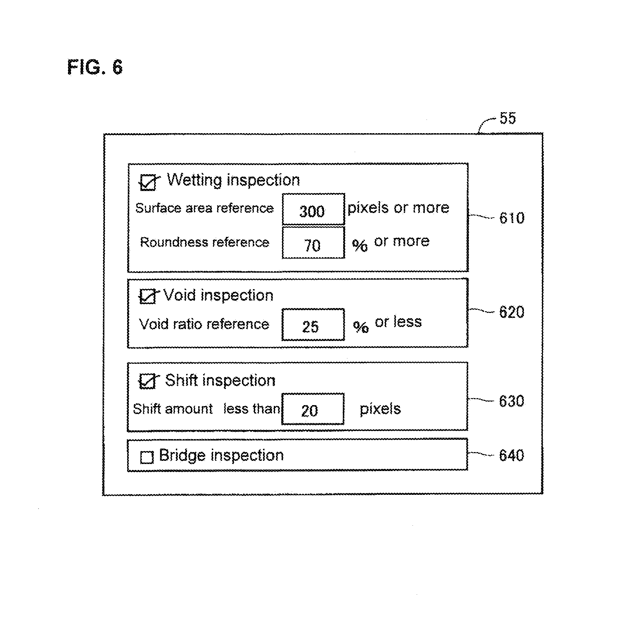

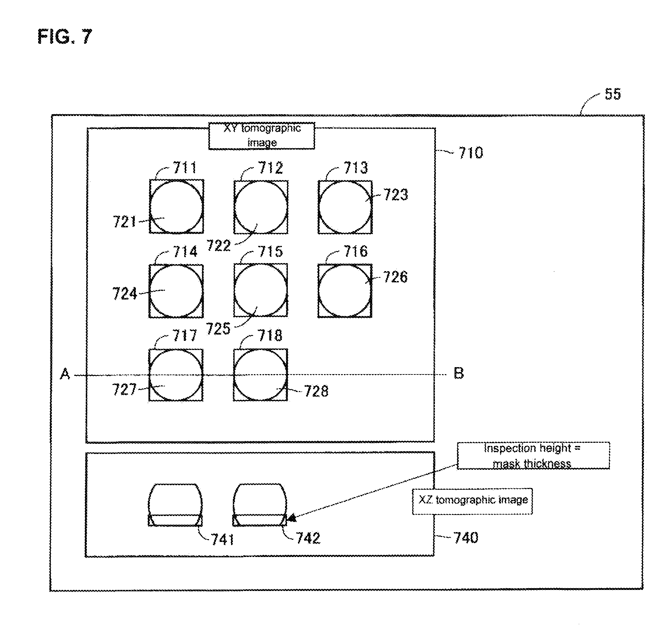

Next is a description of the setting of operating conditions of the X-ray inspection apparatus 100 according to the present embodiment with reference to FIGS. 6 to 7. FIG. 6 is a diagram showing an operating condition setting screen for wetting inspection, void inspection, shift inspection, and bridge inspection. FIG. 7 is a diagram showing inspection target regions.

As shown in FIG. 6, if the user of the X-ray inspection apparatus 100 has performed an operation on the input unit 40, the display unit 55 displays a setting screen under control of the arithmetic unit 70. The setting screen includes a region 610 for setting conditions in wetting inspection, a region 620 for setting conditions in void inspection, a region 630 for setting conditions in shift inspection, and a region 640 for setting conditions in bridge inspection.

In one embodiment, the wetting inspection is performed based on a reference surface area and a reference roundness. The void inspection is performed based on a void ratio value. The shift inspection is performed based on a shift amount value. With bridge inspection, whether bridge inspection is to be performed is set according to the type of board. The execution of the various types of inspection is designated by inputting checks in the checkboxes set for the regions 610, 620, 630, and 640. Also, a configuration is possible in which in the case of executing a plurality of types of inspection, the order in which the inspection is executed can be set depending on the board.

Also, various reference data is input by inputting values into the data input regions shown in the various regions. The input data is stored in the auxiliary storage unit 90b, and then read out from the auxiliary storage unit 90b in accordance with the type of board to be inspected and loaded into the main storage unit 90a.

If the user has performed an input operation on the input unit 40 for setting the inspection target region, the display unit 55 displays a region 710 for setting the inspection region of an XY tomographic image and a region 740 for setting the inspection region of an XZ tomographic image, as shown in FIG. 7, under control of the arithmetic unit 70.

In one embodiment, in the region 710, inspection windows 711 to 718 are displayed in the field of view that can be imaged in one instance of imaging. The number of inspection windows depends on the type of board serving as the inspection target and the size of the inspection target. The inspection windows are each set so as to enclose an image serving as the inspection target. For example, the inspection window 711 is set so as to include at least an image 721. The same follows for the other inspection windows 712 to 718.

The region 740 shows a cross-section taken along the line AB shown in the region 710. The inspection height (i.e., mask thickness) is set in order to perform inspection in the height direction. Specifically, inspection heights 741 and 742 are designated. These designated values are stored in the storage unit 90.

### <Data configuration>

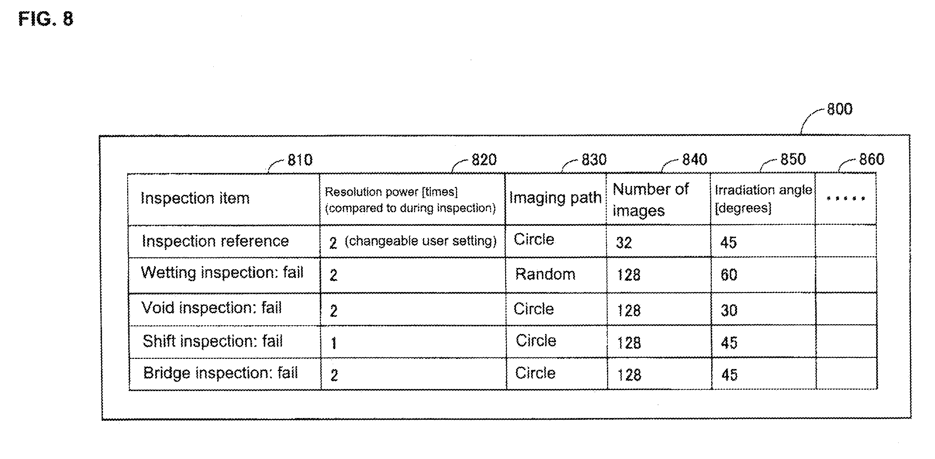

Below is a description of the configuration of data in the X-ray inspection apparatus 100 according to the present embodiment with reference to FIGS. 8 to 9.

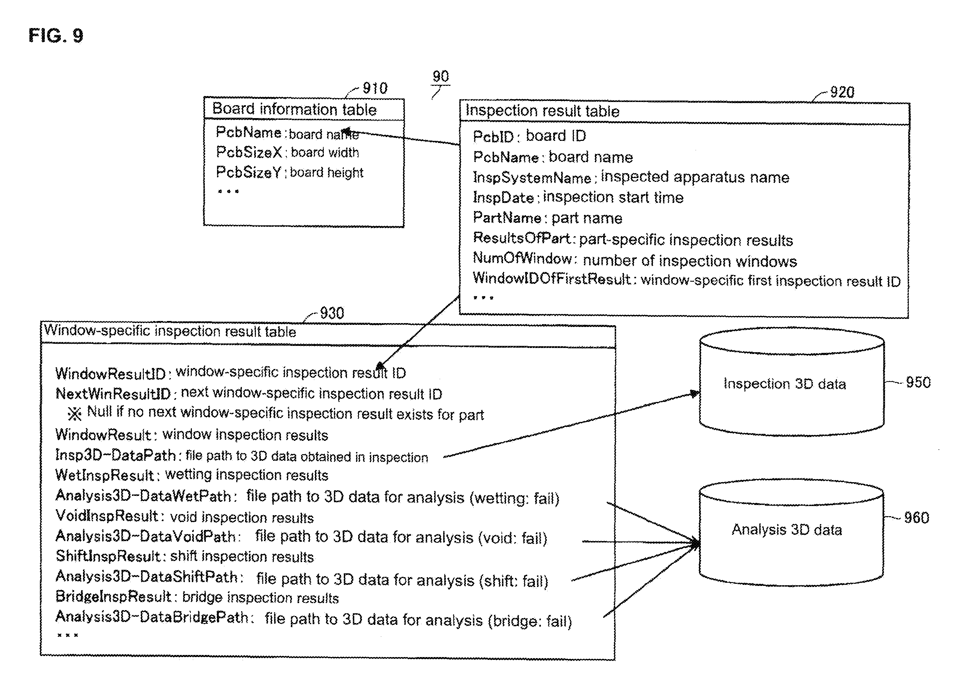

FIG. 8 is a diagram showing a configuration of the analysis mode setting table 800 stored in the storage unit 90. FIG. 9 is a diagram conceptually showing one aspect of how data is stored in the storage unit 90.

As shown in FIG. 8, the analysis mode setting table 800 includes inspection items 810, resolution powers 820, imaging paths 830, numbers of images 840, irradiation angles 850, and reserved regions 860. In one embodiment, main items among the inspection items 810 include "inspection reference", "wetting inspection: fail", "void inspection: fail", "shift inspection: fail", and "bridge inspection: fail". Specific setting values for the resolution power, the imaging path, the number of images, and the irradiation angle are set according to the type of board, the poor portion serving as the inspection target, and the like. The data shown in the analysis mode setting table 800 can be changed by the user inputting data to the input unit 40. Also, in another aspect, an information processing/communication apparatus connected to the X-ray inspection apparatus 100 can change conditions online by transmitting data to the X-ray inspection apparatus 100.

In another aspect, the analysis mode setting table 800 may further include a CT algorithm (iterative reconstruction algorithm) set for each inspection item.

As shown in FIG. 9, the storage unit 90 stores a board information table 910, an inspection result table 920, a window-specific inspection result table 930, inspection three-dimensional data 950 obtained during inspection, and analysis three-dimensional data 960 that is for use in analysis.

The board information table 910 includes, for example, at least a board name, a board width, and a board height.

The inspection result table 920 includes, for example, at least a board ID, a board name, an inspection apparatus name, an inspection start time, a part name, a part-specific inspection result, the number of inspection windows, and a window-specific first inspection result ID.

The window-specific inspection result table 930 includes, for example, at least a window-specific inspection result ID, a next window-specific inspection result ID, a window inspection result, a file path to inspection three-dimensional data, a wetting inspection result, a file path to analysis three-dimensional data (wetting: fail), a void inspection result, a file path to analysis three-dimensional data (void: fail), a shift inspection result, a file path to analysis three-dimensional data (shift: fail), a bridge inspection result, and a file path to analysis three-dimensional data (bridge: fail).

The board information table 910 and the inspection result table 920 are associated with each other by the board name, for example. The inspection result table 920 and the window-specific inspection result table 930 are associated with each other by the window-specific inspection result ID, for example.

The file path to inspection three-dimensional data enables access to the inspection three-dimensional data 950. The file paths to analysis three-dimensional data enable access to respective pieces of analysis three-dimensional data 960.

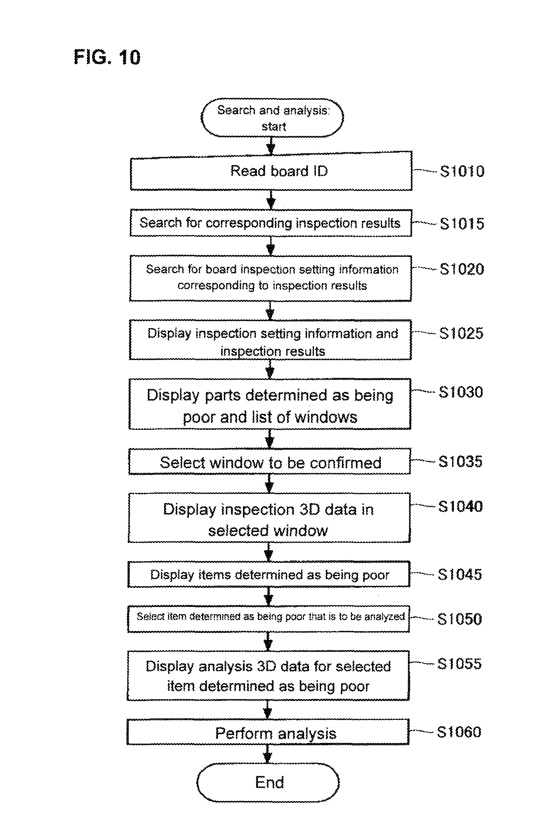

Next is a description of analysis performed using data obtained by the X-ray inspection apparatus 100 with reference to FIG. 10. FIG. 10 is a flowchart showing a procedure of processing executed by the arithmetic unit 70. Note that the processing below is not limited to a form of being executed by the arithmetic unit 70 included in the X-ray inspection apparatus 100, and can also be realized by a normal computer having a known configuration.

In step S1010, the arithmetic unit 70 receives an input of data obtained by reading a board ID. The ID is included in a QR code, for example. The ID is therefore read by a scanning apparatus such as a handy scanner. Note that the ID is not limited to being included in a QR code, and may be a sticker, a laser-marked ID, or the like.

In step S1015, the arithmetic unit 70 searches the storage unit 90 for inspection results corresponding to the board based on the board ID.

In step S1020, the arithmetic unit 70 searches the analysis mode setting table 800 in the storage unit 90 for data (inspection setting information) that has been set for inspection with respect to the board corresponding to the inspection results.

In step S1025, the arithmetic unit 70 displays parts determined as being poor and a list of windows on the display unit 55. In step S1035, the arithmetic unit 70 receives a selection of a window to be checked, based on an input operation performed on the input unit 40. In step S1040, based on the selection, the arithmetic unit 70 reads out inspection three-dimensional data (3D data) corresponding to the window from the storage unit 90, and displays the readout data on the display unit 55. Note that there is no limitation to only 3D data being displayed. In another aspect, two-dimensional data (2D data) may be displayed. In this case, under control of the arithmetic unit 70, the display unit 55 can display, from among the images included in the 3D data, at least one or more images among the XY tomographic images, the XZ tomographic images, and the ZY tomographic images used in inspection.

In step S1045, the arithmetic unit 70 displays items determined as being poor on the display unit 55.

In step S1050, the arithmetic unit 70 receives a selection of an item determined as being poor that is to be the target of analysis, based on a selection operation performed on the input unit 40.

In step S1055, the arithmetic unit 70 reads out, from the storage unit 90, analysis three-dimensional data corresponding to the selected item determined as being poor, and displays the readout data on the display unit 55.

In step S1060, the arithmetic unit 70 executes analysis processing that has been designated in advance with respect to the inspection based on the readout data. Specifically, rather than merely performing checking visually or the like, it is desirable to perform measurement during inspection (e.g., surface area and roundness) and perform other measurement, and to be able to perform quantitative analysis. Quantitative analysis may be performed by a commercially available image processing tool.

Note that in another aspect, the analysis processing can be performed based on input performed by the user of the X-ray inspection apparatus 100 as well. In other words, the user of the X-ray inspection apparatus 100 may input the results of visual inspection to the X-ray inspection apparatus 100. In this case, the arithmetic unit 70 stores the input data and the board in the storage unit 90 in association with each other.

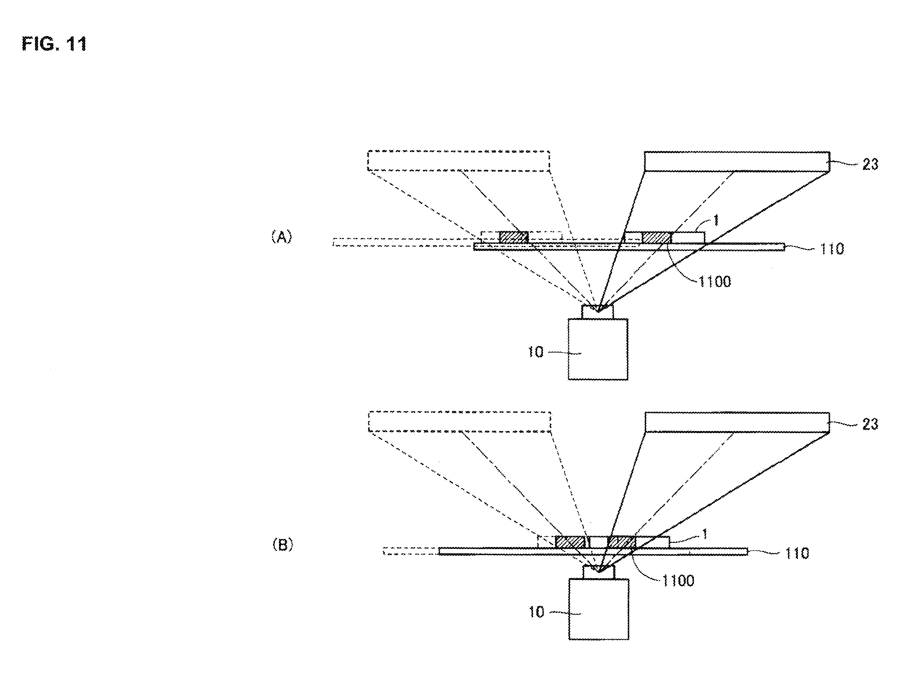

Next is a description of the changing of imaging conditions for defect analysis in the X-ray inspection apparatus 100 according to the present embodiment with reference to FIGS. 11A and 11B to 13A to 13C.

FIGS. 11A and 11B are diagrams showing operating conditions of the X-ray inspection apparatus 100 in the case of raising the imaging magnification ratio which embodiment does not form part of the claimed invention. As shown in FIG. 11A, for the case where normal inspection (i.e., high-speed inspection) is to be performed, the X-ray source 10 of the X-ray inspection apparatus 100 and the positions of the inspection target position driving mechanism 110 and the X-ray detector 23 are set in accordance with, for example, predetermined specifications.

In contrast, as shown in FIG. 11B, in the case where imaging for defect analysis is to be performed, the inspection target position driving mechanism 110 is moved such that the distance between the X-ray detector 23 and the inspection target position driving mechanism 110 is greater than the distance been between the X-ray source 10 and the inspection target position driving mechanism 110, in order to capture an enlarged image of a location 1100 detected as being poor. The movement performed in order to change the magnification ratio is, for example, stored in the imaging condition information 94 as a preset operating condition. Based on this operating condition, the inspection target position control unit 800 causes the inspection target position control mechanism 120 to move the inspection target position driving mechanism 110.

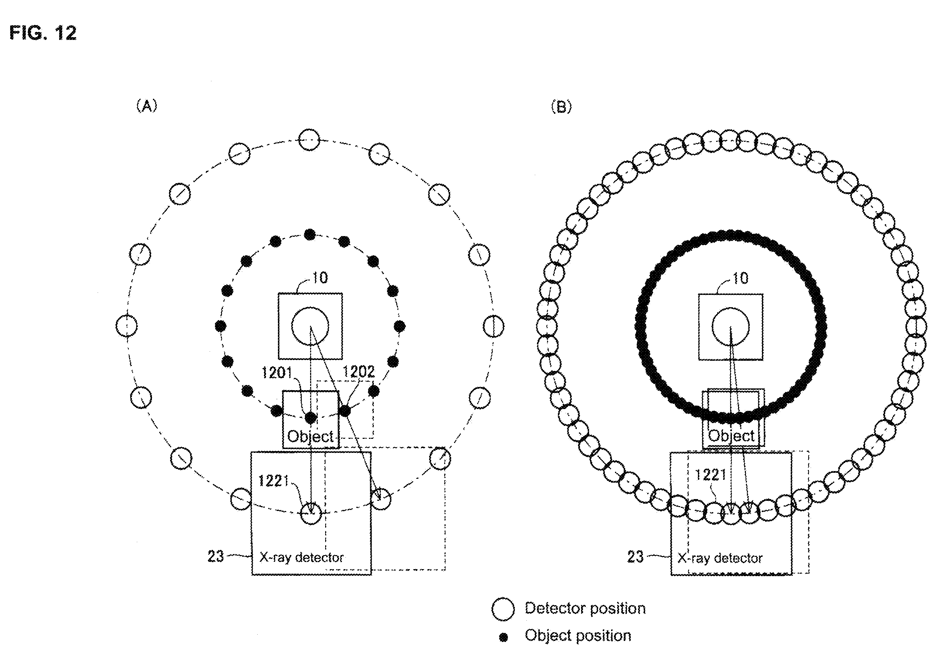

FIGS. 12A and 12B are diagrams showing how the number of images for defect analysis is raised, which embodiment does not form part of the claimed invention.

As shown in FIG. 12A, in one exemplary embodiment, the X-ray inspection apparatus 100 is configured such that 16 images are captured in the case of high-speed inspection (i.e., normal inspection). In this case, the arithmetic unit 70 controls the X-ray detector driving unit 22 and the inspection target position driving mechanism 110 so as to cause the X-ray detector 23 and the inspection target position to move to, for example, 16 preset positions.

In contrast, as shown in FIG. 12B, in the case where 64 images, for example, are to be captured as an imaging condition for defect analysis, the arithmetic unit 70 controls the X-ray detector driving unit 22 and the inspection target position driving mechanism 110 so as to cause the X-ray detector 23 and the inspection target position to move to 64 positions on the same circle.

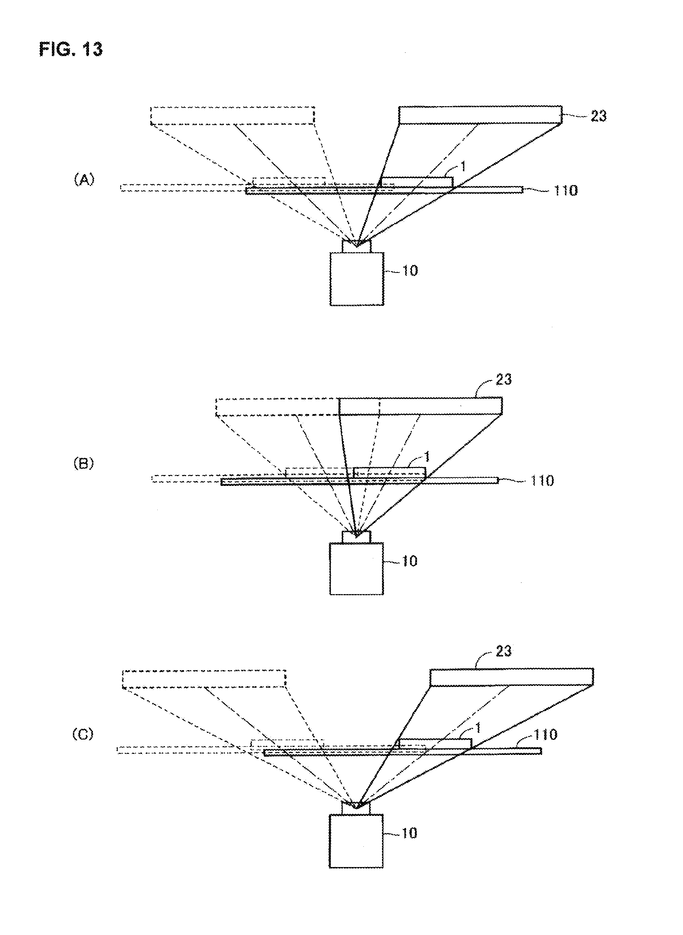

FIGS. 13A to 13C are diagrams showing how the irradiation angle is changed in order to perform imaging for defect analysis. As shown in FIG. 13A, in the case of high-speed inspection (i.e., normal inspection), the X-ray source 10, the inspection target position driving mechanism 110, and the X-ray detector 23 are arranged at positions set in advance according to the board at the inspection target position, as previously described. In one embodiment, the X-ray inspection apparatus 100 is configured such that the angle formed by the perpendicular direction and the irradiation direction of X-rays irradiated from the X-ray source 10 is 45 degrees, for example.

In contrast, as shown in FIG. 13B, in the case of analyzing a defect whose characteristics appear more often in the horizontal direction in a tomogram, such as a void, abnormal contour, or foreign object, the arithmetic unit 70 moves the inspection target position driving mechanism 100 such that the X-ray source 10 irradiates X-rays at a shallower irradiation angle than that normally used. In this case, the angle formed by the irradiation direction and the perpendicular direction may have a value smaller than the above-described value of 45 degrees (e.g., 30 degrees), for example. Accordingly, there are cases where the X-ray inspection apparatus 100 can display the shape of a defect in a tomogram more accurately than during high-speed inspection. The above-described angle is not limited to one value, and can be set by the user according to, for example, the item to be the target of inspection.

Also, as shown in FIG. 13C, in another aspect, the arithmetic unit 70 moves the inspection target position driving mechanism 110 such that X-rays are irradiated at an irradiation angle that is deeper with respect to the inspection target position. For example, in the case of a defect whose characteristic often appears in the perpendicular direction of a tomogram, such as failed wetting at the bond surface of a solder ball, performing imaging using a deep irradiation angle enables observing the shape of the defect in the tomogram more accurately than when using the irradiation angle for high-speed inspection shown in FIG. 13A. In this case, the angle formed by the irradiation direction and the perpendicular direction may have a value greater than the above-described value of 45 degrees (e.g., 60 degrees), for example. Accordingly, there are cases where the X-ray inspection apparatus 100 can display the shape of a defect in a tomogram more accurately than during high-speed inspection. The above-described angle is not limited to one value, and can be set by the user according to, for example, the item to be inspected.

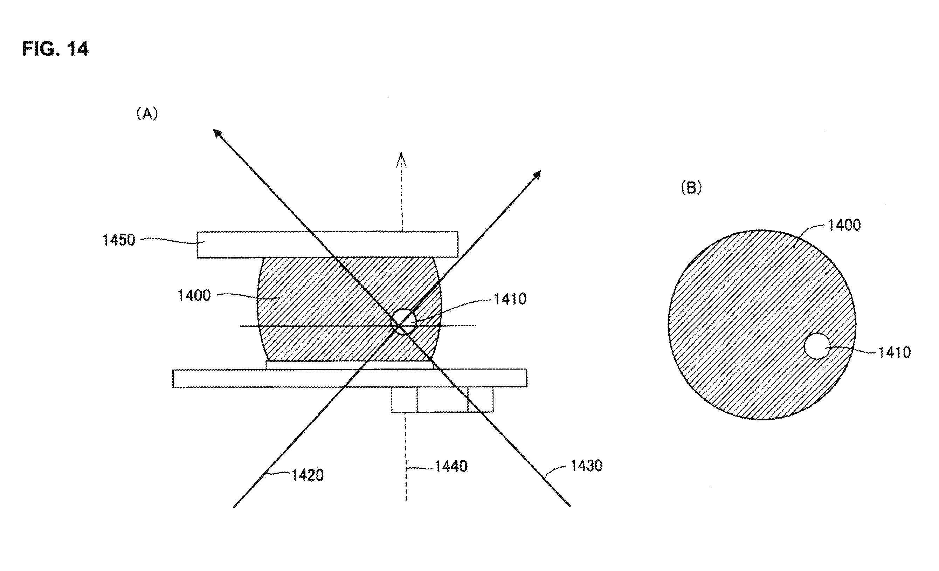

Next is a description of void inspection performed by the X-ray inspection apparatus 100 according to the present embodiment with reference to FIGS. 14A and 14B. FIGS. 14A and 14B are diagrams illustrating the irradiation angle of X-rays in void inspection.

As shown in FIG. 14A, there are cases where solder 1400 includes a void 1410. In this case, in order to inspect the void 1410, there are cases where a reconstructed image generated using images obtained by irradiating X-rays along irradiation directions 1420 and 1430, which are tilted with respect to a perpendicular direction 1440, is preferable over an image obtained by irradiating X-rays in the perpendicular direction 1440. This is because depending on the type of board that is the inspection target, if another part is disposed over the solder 1400, it may be impossible to separate that other part from the void.

As shown in FIG. 14B, in a tomographic reconstructed image generated from images obtained by irradiating X-rays from a series of irradiation directions such as the irradiation directions 1420 and 1430, the void is displayed separately from a background part (i.e., the part arranged over the solder 1400) 1450.

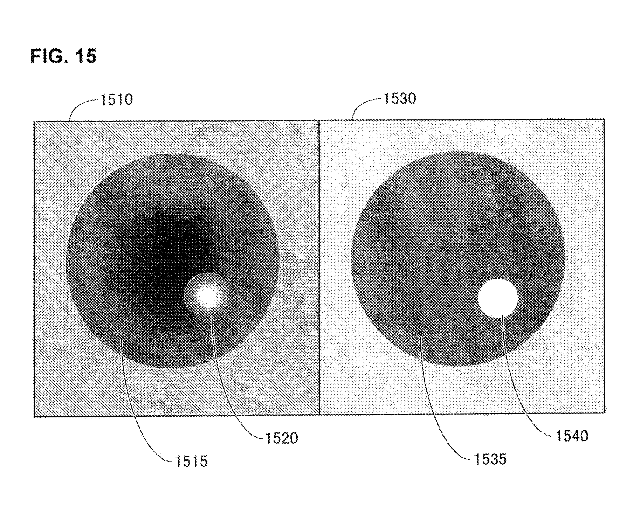

Next is a description of differences between an image obtained during high-speed inspection and an image obtained for defect analysis with reference to FIG. 15. FIG. 15 shows an example of an image obtained by high-speed inspection and an image obtained by defect inspection side-by-side. Image 1510 corresponds to an image obtained by high-speed inspection. Image 1510 includes a region 1520 showing a void in a solder image 1515. Image 1530 is an image obtained by changing the operating conditions of the X-ray inspection apparatus 100 in order to perform defect analysis. An image 1535 showing solder is displayed in the image 1530. The image 1535 includes a region 1540 representing a void. In this case, the surface area of the region 1540 in the image 1530 obtained by inspection for defect analysis is more reliable than that of the region 1520 in the image 1510 obtained by high-speed inspection. For example, the repeated measurement precision of the surface area of the region 1520 in the image 1510 obtained by high-speed inspection is ±10 µm², whereas the repeated measurement precision of the surface area of the region 1540 in the image 1530 obtained by defect analysis inspection is ±2 µm².

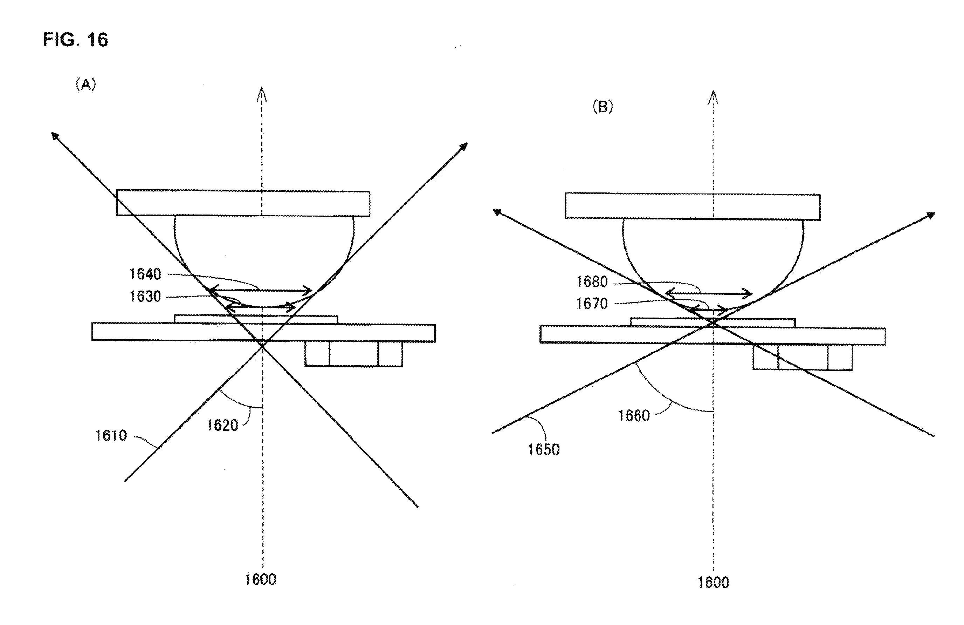

Next is a description of the changing of the irradiation angle in the X-ray inspection apparatus 100 according to the present embodiment with reference to FIGS. 16A and 16B. FIGS. 16A and 16B are diagrams showing the correspondence between irradiation at a prescribed irradiation angle and irradiation at an irradiation angle higher than the prescribed irradiation angle. As shown in FIG. 16A, the X-ray inspection apparatus 100 is configured such that in high-speed inspection, X-rays are irradiated along an irradiation direction 1610 based on an irradiation angle 1620 that has been set in advance with respect to a perpendicular direction 1600. The cross-sectional areas obtained at this time are values close to diameters 1630 and 1640, which are circle diameters. In contrast, as shown in FIG. 16B, X-rays are irradiated in an irradiation direction 1650 based on an irradiation angle 1660, which is higher than the irradiation angle 1620. Diameters 1670 and 1680 obtained at this time are different from the diameters 1630 and 1640. Here, since the rate of change from the diameter 1670 to the diameter 1680 is greater than the rate of change from the diameter 1630 to the diameter 1640, the rate of change in the surface area in the Z direction is accordingly higher as well. Consequently, images obtained during defect analysis enable more accurate defect analysis than images obtained during high-speed inspection.

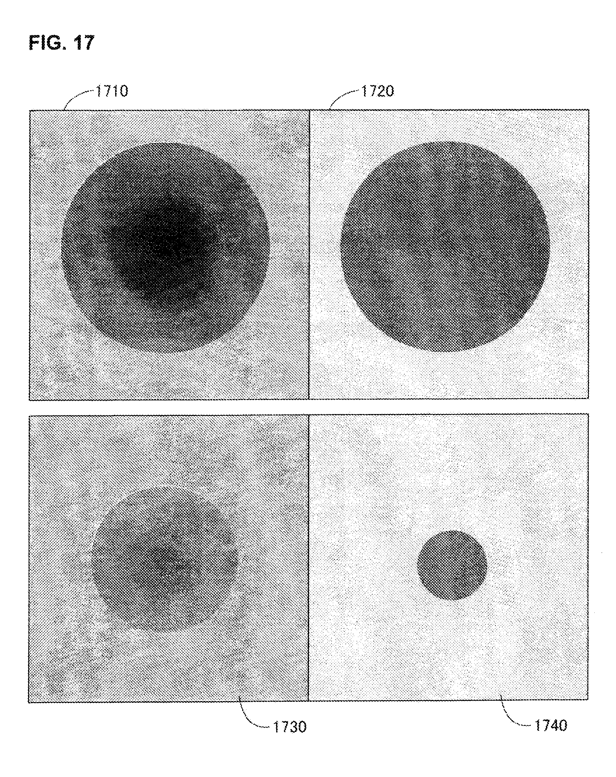

Next is a description of changes in surface area due to differences in irradiation angles with reference to FIG. 17. FIG. 17 is a diagram showing tomographic images of the center of a ball obtained by high-speed inspection and defect analysis inspection and tomographic images of a bond surface obtained by high-speed inspection and defect analysis inspection. An image 1710 is an image obtained by high-speed inspection. The image 1710 shows a tomogram at the center of a ball. An image 1720 shows a tomogram at the center of the ball captured in defect analysis inspection. An image 1730 shows a tomogram of a bond surface captured in high-speed inspection. An image 1740 shows a tomogram of a bond surface captured in defect inspection.

As shown in FIGS. 16A and 16B, the X-ray irradiation angle in the case of high-speed inspection differs from the X-ray irradiation angle in the case of defect analysis inspection. As a result, the diameter differs between the captured images, as is evident in the images 1730 and 1740. This enables precisely detecting the degree to which the bond at the bond surface is poor.

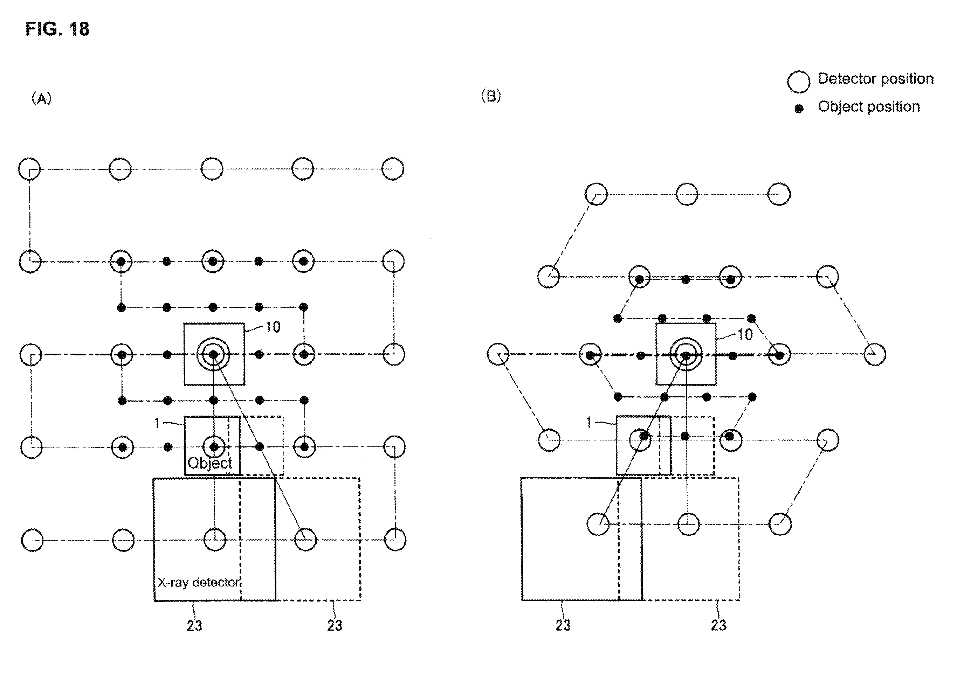

Next is a description of the case of performing imaging using a path other than a circular path, which embodiment does not form part of the claimed invention with reference to FIGS. 18A and 18B. FIG. 18A is a diagram showing a path in the case where the imaging points are in a lattice configuration. FIG. 18B is a diagram showing a path in the case where the imaging points are in an oblique lattice configuration.

As described above, the X-ray inspection apparatus 100 according to the present embodiment switches between imaging conditions for normal inspection and imaging conditions for defect analysis when performing X-ray imaging. In the case of normal inspection, the X-ray inspection apparatus 100 operates under conditions set in advance for realizing high-speed inspection. In the case of defect analysis, the X-ray inspection apparatus 100 operates under conditions set for obtaining detailed images. According to this configuration, X-ray inspection for high-speed inspection and for defect analysis are realized by the same X-ray inspection apparatus 100 without lowering the efficiency of X-ray inspection.

### Second embodiment

### <Control configuration>

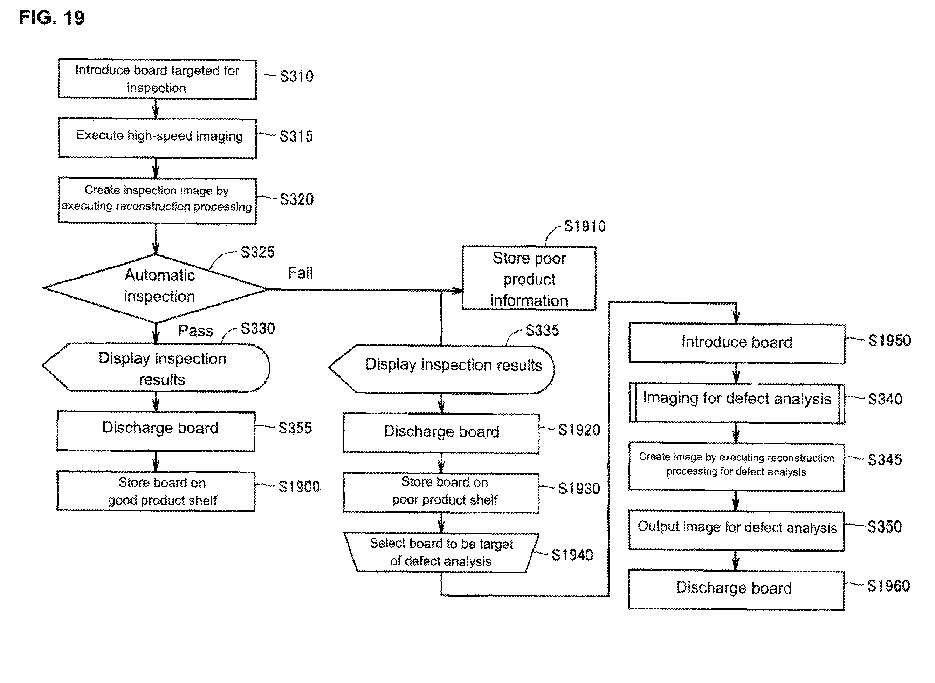

The following describes the control configuration of an X-ray inspection apparatus 100 according to a second embodiment with reference to FIG. 19. FIG. 19 is a flowchart showing processing performed using the X-ray inspection apparatus 100 according to the present embodiment. The inspection performed using the X-ray inspection apparatus according to the present embodiment differs from that using the X-ray inspection apparatus according to the first embodiment described above in that in the present embodiment, information regarding a board that has failed inspection is stored in a nonvolatile memory, and imaging and inspection for defect analysis are performed again after once again introducing the board. Note that the X-ray inspection apparatus 100 according to the present embodiment can be realized using the hardware for realizing the X-ray inspection apparatus 100 according to the first embodiment. Accordingly, a redundant description of the hardware will not be given.

Also, features and processing other than the processing described below are similar to the features and processing of the X-ray inspection apparatus 100 according to the first embodiment. Accordingly, a redundant description thereof will not be given.

In step S1900, a board that has been determined to have passed inspection and has been discharged (S355) is conveyed by the X-ray inspection apparatus 100 to a good product shelf (not shown). The arithmetic unit 70 associates the ID of the board with its storage location on the good product shelf, thus storing information regarding the disposed location of the board in the storage unit 90.

In step S1910, the arithmetic unit 70 stores inspection results with respect to a board determined as having failed the automatic inspection, as defect information in the storage unit 90. Specifically, the ID of the board and the content of the inspection results are associated with each other. Note that the defect information is not limited to being stored in the X-ray inspection apparatus 100 (in the storage unit 90). For example, the defect information may be stored in a storage apparatus that is network-connected to the X-ray inspection apparatus 100.

In step S1920, the X-ray inspection apparatus 100 discharges the board.

In step S1930, the discharged board is stored on a poor product shelf (not shown). Note that although it is desirable that the poor product shelf and the good product shelf are separate, it is possible to use a shelf divided into a region for good products and a region for poor products.

In step S1940, the arithmetic unit 70 selects a board to be the target of defect analysis based on input given to the input unit 40. Specifically, the arithmetic unit 70 references the inspection results associated with the board IDs (step S1910), and searches for a board for which the inspection result is "poor". The arithmetic unit 70 holds the inspection results in the work area of an internal memory.

In step S1950, the X-ray inspection apparatus 100 receives the introduction of a board to be the target of defect analysis using the conveying mechanism (not shown). Specifically, the arithmetic unit 70 references the data held in the work area, specifies the storage location of the board to be the target of re-inspection, and gives the conveying mechanism a command to introduce the board from the storage location. The conveying mechanism introduces the board to the X-ray inspection apparatus 100 in accordance with the command. Note that in the case where a plurality of boards have been determined as being poor, the order in which they are introduced is the order in which inspection was completed, the order of the board IDs, the order of the defect items, or the like. Thereafter, imaging for defect analysis (step S340) is performed on the board, an image is created (S345), and the image is output (step S350).

In step S1960, the X-ray inspection apparatus discharges the board for which imaging for defect analysis has ended. The conveying mechanism stores the board on the poor product shelf on which it was originally stored.

As described above, the X-ray inspection apparatus 100 according to the present embodiment executes high-speed inspection on all boards targeted for inspection, and in the case where a board determined as being poor has been detected, stores the ID, inspection results, and storage location of the board in the storage unit 90 in association with each other. After the high-speed inspection has been completed, the X-ray inspection apparatus 100 executes imaging for analysis on boards determined as being poor. According to this configuration, boards determined as being good products are quickly conveyed to the next step after X-ray inspection thereof has ended. As a result, the lead time up to product completion can be made even shorter.

The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

### LIST OF REFERENCE NUMERALS

1 ... inspection target, 10 ... scan-type X-ray source, 18 ... X-rays, 20 ... scanning object, 22 ... X-ray detector driving unit, 23 ... X-ray detector, 30 ... image acquisition control mechanism, 32 ... detector driving control mechanism, 34 ... image data acquisition unit, 40 ... input unit, 50 ... output unit, 55 ... display unit, 60 ... X-ray source control mechanism, 62 ... X-ray source control unit, 70 ... arithmetic unit, 72 ... X-ray source control unit, 74 ... image acquisition control unit, 76 ... reconstruction unit, 78 ... good/poor determination unit, 80 ... inspection target position control unit, 82 ... X-ray focal point calculation unit, 84 ... imaging condition setting unit, 86 ... inspection information generation unit, 90 ... storage unit, 90a ... main storage unit, 90b ... auxiliary storage unit, 92 ... X-ray focal point information, 94 ... imaging condition information, 96 ... program, 98 ... image data, 100 ... X-ray inspection apparatus, 110 ... inspection target position driving mechanism, 111a,111 b ... stages, 112a, 112b ... board rails, 114 ... displacement meter, 124 ... displacement meter control mechanism, 126 ... board driving control mechanism, 800 ... analysis mode setting table

## Claims

1. An X-ray inspection apparatus (100) for executing a process for reconstructing a tomographic image of an inspection target region of an object by receiving X-rays that have passed through the inspection target region with a plurality of detection surfaces, comprising:
a normal condition storage unit (90) adapted to store
a normal operating condition,
which is an operating condition of the X-ray inspection apparatus (100) and is used for inspecting the object;
a re-inspection condition storage unit (90) adapted to store one or more re-inspection operating conditions, which are for use in re-inspection in a case where the object is a poor product and are different from the normal operating condition;
an X-ray detection mechanism (23) for imaging with the plurality of detection surfaces;
an X-ray output unit (10) for outputting X-rays such that the X-rays that have passed through the inspection target region are incident on the X-ray detection mechanism (23) at one of the detection surfaces; and
a control unit (70) for controlling operation of the X-ray inspection apparatus (100),
wherein the control unit (70) includes:
a determination unit (78) adapted to determine whether the object is a good product
or a poor product based on the normal operating condition; and
an analysis operation control unit to,
in a case where the object is a poor product, switch
an operating condition of the X-ray inspection apparatus (100) from the normal operating condition to the one or more re-inspection operating conditions, and control operation of the X-ray inspection apparatus (100) based on the one or more re-inspection operating conditions,
**characterised by**
the one or more re-inspection operation conditions including an X-ray irradiation angle which is changed from an X-ray irradiation angle included in the normal operating condition.

2. The X-ray inspection apparatus (100) according to claim 1, further comprising an X-ray detection mechanism moving unit (22) for moving the X-ray detection mechanism (23).

3. The X-ray inspection apparatus (100) according to claim 1 or 2, further comprising an object moving unit (110) for moving the object.

4. The X-ray inspection apparatus (100) according to any of claims 1 to 3,
wherein the one or more re-inspection operating conditions are each prescribed according to a type of defect to be re-inspected on the object, and
the analysis operation control unit controls operation of the X-ray inspection apparatus (100) under the each of the one or more re-inspection operating conditions that is based on the type of defect.

5. The X-ray inspection apparatus (100) according to claim 3 or 4,
wherein in order for the X-ray detection mechanism (23) to acquire an image with a higher enlargement ratio than that of an image captured under the normal operating condition, the analysis operation control unit controls operation of the X-ray inspection apparatus (100) so as to change a distance between the X-ray detection mechanism (23) and the object moving unit (110) or a distance between the X-ray output unit (10) and the object moving unit (110).

6. The X-ray inspection apparatus (100) according to any one of claims 1 to 5,
wherein in order to acquire a higher number of images than the number of images acquired under the normal operating condition, the analysis operation control unit controls operation of the X-ray inspection apparatus (100) so as to perform imaging at a higher number of positions than the number of positions at which imaging is performed under the normal operating condition.

7. The X-ray inspection apparatus (100) according to any one of claims 1 to 6,
wherein the analysis operation control unit controls operation of the X-ray inspection apparatus (100) so as to change the X-ray irradiation angle in accordance with a reference determined in advance according to a cause of a defect in the object.

8. The X-ray inspection apparatus (100) according to any one of claims 1 to 7,
wherein the analysis operation control unit controls operation of the X-ray inspection apparatus (100) so as to change a path of the object and the X-ray detection mechanism (23) from a first path that has been determined in advance with respect to the normal operating condition to a second path that has been determined in advance as one of the one or more re-inspection operating conditions.

9. The X-ray inspection apparatus (100) according to any one of claims 1 to 8,
wherein in order to obtain a higher contrast than the contrast of an image acquired under the normal operating condition, the analysis operation control unit controls operation of the X-ray inspection apparatus (100) so as to adjust a tube voltage, a tube current, or an exposure time based on the one or more re-inspection operating conditions.

10. The X-ray inspection apparatus (100) according to any one of claims 1 to 9,
wherein the analysis operation control unit controls operation of the X-ray inspection apparatus (100) such that imaging is performed with an X-ray focal point diameter that has been switched from a first focal point diameter that has been determined in advance as the normal operating condition to a second focal point diameter that has been determined in advance as one of the one or more re-inspection operating conditions and furthermore is smaller than the first focal point diameter.

11. The X-ray inspection apparatus (100) according to any one of claims 1 to 10, further comprising:
a reconstruction unit (76) for reconstructing an image obtained by X-ray imaging,
wherein the control unit (70) further includes:
an algorithm changing unit for changing an algorithm for reconstructing an image from a first algorithm used for reconstructing an image under the normal operating condition to a second algorithm used for reconstructing an image under the one or more re-inspection operating conditions.

12. The X-ray inspection apparatus (100) according to any one of claims 1 to 11, further comprising:
a display unit (55) for displaying a result regarding an object determined as being a poor product under the normal operating condition and an image captured under the one or more re-inspection operating conditions with respect to a location at which the object was determined as being the poor product.

13. An X-ray inspection method for causing a computer that functions as an X-ray inspection apparatus (100) to execute a process for reconstructing a tomographic image of an inspection target region of an object by receiving X-rays that have passed through the inspection target region with a detection surface, comprising the steps of:
loading a normal operating condition used for inspecting the object into a memory of the computer;
loading, into the memory, one or more re-inspection operating conditions that are for use in re-inspection in a case where the object is a poor product and that are different from the normal operating condition, the one or more re-inspection operating conditions each being prescribed according to a type of defect targeted for inspection;
outputting X-rays such that the X-rays that have passed through the inspection target region are incident on an X-ray detection mechanism (23) for imaging with the detection surface at an imaging position; and
controlling operation of the X-ray inspection apparatus (100),
wherein the controlling operation step includes the steps of:
determining whether the object is a good product or a poor product based on the normal operating condition (S325); and
switching, in a case where the object is a poor product, an operating condition of the X-ray inspection apparatus (100) from the normal operating condition to the one or more re-inspection operating conditions, and controlling operation of the X-ray inspection apparatus (100) based on the one or more re-inspection operating conditions (S445, S475, S495, S540),
**characterised by**
the one or more re-inspection operation conditions including
irradiation angle which is changed from an X-ray irradiation angle included in the normal operating condition.

14. The X-ray inspection method according to claim 13, further comprising the step of:
reconstructing an image obtained by X-ray imaging (S320),
wherein the controlling operation step further includes the step of:
changing an algorithm from a first algorithm used for reconstructing an image under the normal operating condition to a second algorithm used for reconstructing an image under the one or more re-inspection operating conditions.

15. The X-ray inspection method according to claim 13 or 14, further comprising the step of:
displaying a result regarding an object determined as being a poor product under the normal operating condition and an image captured under the one or more re-inspection operating conditions with respect to a location at which the object was determined as being the poor product (S335, S350).

## Patentansprüche

1. Röntgenstrahlenuntersuchungsapparat (100) zum Ausführen eines Vorgangs zum Rekonstruieren eines tomographischen Bilds einer Untersuchungszielregion eines Objekts mittels Empfangens von Röntgenstrahlen, welche durch die Untersuchungszielregion hindurch gegangen sind, mit einer Mehrzahl von Detektionsoberflächen, welcher aufweist:
eine Normalbedingung-Speichereinheit (90), die dazu eingerichtet ist, eine normale Betriebsbedingung zu speichern, welche eine Betriebsbedingung des Röntgenstrahlenuntersuchungsapparats (100) ist und zum Untersuchen des Objekts verwendet wird;
eine Nachuntersuchungsbedingung-Speichereinheit (90), die dazu eingerichtet ist, eine oder mehrere Nachuntersuchungsbetriebsbedingungen zu speichern, die bei einer Nachuntersuchung in einem Fall verwendet werden, wo das Objekt ein schlechtes Produkt ist, und die verschieden von der normalen Betriebsbedingung sind;
ein Röntgenstrahlendetektionsmechanismus (23) zum Abbilden mit der Mehrzahl von Detektionsoberflächen;
eine Röntgenstrahlenausgabeeinheit (10) zum Ausgeben von Röntgenstrahlen, so dass die Röntgenstrahlen, die durch die Untersuchungszielregion hindurch gegangen sind, auf den Röntgenstrahlendetektionsmechanismus (23) an einer der Detektionsoberflächen einfallen; und
eine Steuereinheit (70) zum Steuern des Betriebs des Röntgenstrahlenuntersuchungsapparats (100),
wobei die Steuereinheit (70) umfasst:
eine Bestimmungseinheit (78), welche dazu eingerichtet ist, zu bestimmen, ob das Objekt ein gutes Produkt oder ein schlechtes Produkt ist, basierend auf der normalen Betriebsbedingung; und
eine Analysebetrieb-Steuereinheit, um, in einem Fall, wo das Objekt ein schlechtes Produkt ist, eine Betriebsbedingung des Röntgenstrahlenuntersuchungsapparats (100) von der normalen Betriebsbedingung zu der einen oder mehreren Nachuntersuchungsbetriebsbedingungen umzuschalten und den Betrieb des Röntgenstrahlenuntersuchungsapparats (100) basierend auf der einen oder mehreren Nachuntersuchungsbetriebsbedingungen zu steuern,
**dadurch gekennzeichnet, dass**
die eine oder mehreren Nachuntersuchungsbetriebsbedingungen einen Röntgenstrahlenbestrahlungswinkel umfassen, welcher von einem Röntgenstrahlenbestrahlungswinkel geändert ist, der in der normalen Betriebsbedingung umfasst ist.

2. Röntgenstrahlenuntersuchungsapparat (100) gemäß Anspruch 1, welcher ferner eine Bewegungseinheit für den Röntgenstrahlendetektionsmechanismus (22) zum Bewegen des Röntgenstrahlendetektionsmechanismus (23) aufweist.

3. Röntgenstrahlenuntersuchungsapparat (100) gemäß Anspruch 1 oder 2, welcher ferner eine Objektbewegungseinheit (110) zum Bewegen des Objekts aufweist.

4. Röntgenstrahlenuntersuchungsapparat (100) gemäß einem der Ansprüche 1 bis 3,
wobei die eine oder mehreren Nachuntersuchungsbetriebsbedingungen jeweils gemäß einer Art des Defekts festgesetzt sind, der an dem Objekt nachuntersucht werden soll, und
die Analysebetrieb-Steuereinheit einen Betrieb des Röntgenstrahlenuntersuchungsapparat (100) gemäß jeder der einen oder mehreren Nachuntersuchungsbetriebsbedingungen steuert, der auf der Art des Defekts basiert ist.

5. Röntgenstrahlenuntersuchungsapparat (100) gemäß einem der Ansprüche 3 oder 4,
wobei, damit der Röntgenstrahlendetektionsmechanismus (23) ein Bild mit einem größeren Vergrößerungsverhältnis als das eines Bilds erlangt, das gemäß der normalen Betriebsbedingung aufgenommen ist, die Analysebetrieb-Steuereinheit einen Betrieb des Röntgenstrahlenuntersuchungsapparats (100) derart steuert, dass ein Abstand zwischen dem Röntgenstrahlendetektionsmechanismus (23) und der Objektbewegungseinheit (110) oder einen Abstand zwischen der Röntgenstrahlenausgabeeinheit (10) und der Objektbewegungseinheit (10) geändert wird.

6. Der Röntgenstrahlenuntersuchungsapparat (100) gemäß einem der Ansprüche 1 bis 5,
wobei, damit eine größere Anzahl von Bildern als die Anzahl der Bilder erlangt wird, die gemäß der normalen Betriebsbedingung erlangt ist, die Analysebetrieb-Steuereinheit einen Betrieb des Röntgenstrahlenuntersuchungsapparats (100) derart steuert, dass ein Abbilden bei einer größeren Anzahl von Positionen durchgeführt wird, als die Anzahl der Positionen, an welchen das Abbilden gemäß der normalen Betriebsbedingung durchgeführt ist.

7. Röntgenstrahlenuntersuchungsapparat (100) gemäß einem der Ansprüche 1 bis 6,
wobei die Analysebetrieb-Steuereinheit einen Betrieb des Röntgenstrahlenuntersuchungsapparats (100) derart steuert, dass der Röntgenstrahlenbestrahlungswinkel in Übereinstimmung mit einer Referenz geändert wird, die vorher gemäß einer Ursache eines Defekts in dem Objekt bestimmt ist.

8. Röntgenstrahlenuntersuchungsapparat (100) gemäß einem der Ansprüche 1 bis 7,
wobei die Analysebetrieb-Steuereinheit einen Betrieb des Röntgenstrahlenuntersuchungsapparats (100) derart steuert, dass ein Pfad des Objekts und des Röntgenstrahlendetektionsmechanismus (23) von einem ersten Pfad, der vorher mit Bezug auf die normalen Betriebsbedingung bestimmt ist, zu einem zweiten Pfad geändert wird, der vorher als einer der einen oder mehreren Nachuntersuchungsbetriebsbedingungen bestimmt ist.

9. Röntgenstrahlenuntersuchungsapparat (100) gemäß einem der Ansprüche 1 bis 8,
wobei, damit ein größerer Kontrast als der Kontrast eines Bilds erlangt wird, das gemäß der normalen Betriebsbedingung erlangt ist, die Analysebetrieb-Steuereinheit einen Betrieb des Röntgenstrahlenuntersuchungsapparats (100) derart steuert, dass eine Röhrenspannung, ein Röhrenstrom oder eine Belichtungszeit basierend auf der einen oder mehreren Nachuntersuchungsbetriebsbedingungen angepasst wird.

10. Röntgenstrahlenuntersuchungsapparat (100) gemäß einem der Ansprüche 1 bis 9,
wobei die Analysebetrieb-Steuereinheit einen Betrieb des Röntgenstrahlenuntersuchungsapparats (100) derart steuert, dass ein Abbilden mit einem Fokuspunktdurchmesser der Röntgenstrahlen durchgeführt wird, der von einem ersten Fokuspunktdurchmesser, der vorher als die normale Betriebsbedingung bestimmt ist, zu einem zweiten Fokuspunktdurchmesser geändert wird, der vorher als einer der einen oder mehreren Nachuntersuchungsbetriebsbedingungen bestimmt ist und der ferner kleiner als der erste Fokuspunktdurchmesser ist.

11. Der Röntgenstrahlenuntersuchungsapparat (100) gemäß einem der Ansprüche 1 bis 10, welcher ferner aufweist:
eine Rekonstruktionseinheit (76) zum Rekonstruieren eines Bilds, das durch Röntgenstrahlenabbildung erlangt ist,
wobei die Steuereinheit (70) ferner umfasst:
eine Algorithmus-Anderungseinheit zum Ändern eines Algorithmus zum Rekonstruieren eines Bilds von einem ersten Algorithmus, der zum Rekonstruieren eines Bilds gemäß der normalen Betriebsbedingung verwendet wird, zu einem zweiten Algorithmus, der zum Rekonstruieren eines Bilds gemäß der einen oder mehreren Nachuntersuchungsbetriebsbedingungen verwendet wird.

12. Röntgenstrahlenuntersuchungsapparat (100) gemäß einem der Ansprüche 1 bis 11, welcher ferner aufweist:
eine Anzeigeeinheit (55) zum Anzeigen eines Ergebnisses, das ein Objekt betrifft, das als ein schlechtes Produkt gemäß der normalen Betriebsbedingung bestimmt wurde, und eines Bilds, das gemäß der einen oder mehreren Nachuntersuchungsbetriebsbedingungen mit Bezug auf einen Ort aufgenommen wurde, bei welchem das Objekt als ein schlechtes Produkt bestimmt wurde.

13. Röntgenstrahlenuntersuchungsverfahren zum Veranlassen eines Computers, der als ein Röntgenstrahlenuntersuchungsapparat (100) fungiert, einen Vorgang zum Rekonstruieren eines tomographischen Bilds eine Untersuchungszielregion eines Objekts mittels Empfangens von Röntgenstrahlen, die durch die Untersuchungszielregion hindurch gegangen sind, mit einer Detektionsoberfläche auszuführen, welches die folgenden Schritte aufweist:
Laden einer normalen Betriebsbedingung, die zum Untersuchen des Objekts verwendet wird, in einen Speicher des Computers;
Laden einer oder mehrerer Nachuntersuchungsbetriebsbedingungen in den Speicher, die bei einer Nachuntersuchung in einem Fall verwendet werden, wo das Objekt ein schlechtes Produkt ist, und die verschieden von der normalen Betriebsbedingung sind, wobei die eine oder mehreren Nachuntersuchungsbetriebsbedingungen jeweils gemäß einer Art von Defekt festgesetzt sind, auf den die Untersuchung abgezielt ist;
Ausgeben von Röntgenstrahlen, so dass die Röntgenstrahlen, die durch die Untersuchungszielregion hindurch gegangen sind, auf einem Röntgenstrahlendetektionsmechanismus (23) zum Abbilden mit den Detektionsoberfläche bei einer Abbildungsposition einfallen; und
Steuern des Betriebs des Röntgenstrahlenuntersuchungsapparats (100),
wobei der Schritt des Steuerns des Betriebs die folgenden Schritte umfasst:
Bestimmen, ob das Objekt ein gutes Produkt oder ein schlechtes Produkt ist, basierend auf der normalen Betriebsbedingung (S 325); und
Umschalten, in einem Fall, wo das Objekt ein schlechtes Produkt ist, einer Betriebsbedingung des Röntgenstrahlenuntersuchungsapparats (100) von der normalen Betriebsbedingung zu der einen oder mehreren Nachuntersuchungsbetriebsbedingungen, und Steuern des Betriebs des Röntgenstrahlenuntersuchungsapparats (100) basierend auf der einen oder mehreren Nachuntersuchungsbetriebsbedingungen (S 445, S 475, S 495, S 540),
**dadurch gekennzeichnet, dass**
die eine oder mehreren Nachuntersuchungsbetriebsbedingungen einen Röntgenstrahlenbestrahlungswinkel umfassen, welcher von einem Röntgenstrahlenbestrahlungswinkel, der in der normalen Betriebsbedingung umfasst ist, geändert wird.

14. Röntgenstrahlenuntersuchungsverfahren gemäß Anspruch 13, welches ferner den folgenden Schritt aufweist:
Rekonstruieren eines Bilds, das mittels Röntgenstrahlenabbildens (S 320) erlangt wurde,
wobei der Schritt des Steuerns des Betriebs ferner den folgenden Schritt umfasst:
Ändern eines Algorithmus von einem ersten Algorithmus, der zum Rekonstruieren eines Bilds gemäß der normalen Betriebsbedingung verwendet wird, zu einem zweiten Algorithmus, der zum Rekonstruieren eine Bilds gemäß der einen oder mehreren Nachuntersuchungsbetriebsbedingungen verwendet wird.

15. Röntgenstrahlenuntersuchungsverfahren gemäß Anspruch 13 oder 14, welcher ferner den folgenden Schritt aufweist:
Anzeigen eines Ergebnisses, das ein Objekt betrifft, das als ein schlechtes Produkt gemäß der normalen Betriebsbedingung bestimmt wurde, und eines Bilds, das gemäß der einen oder mehreren Nachuntersuchungsbetriebsbedingungen aufgenommen wurde, mit Bezug auf einen Ort, an welchem das Objekt als ein schlechtes Produkt (S 335, S 350) bestimmt wurde.

## Revendications

1. Appareil d'inspection aux rayons X (100) pour exécuter un processus de reconstruction d'une image tomographique d'une région cible d'inspection d'un objet en recevant des rayons X qui ont traversé la région cible d'inspection avec une pluralité de surfaces de détection, comprenant :
- une unité de stockage d'état normal (90) conçue pour stocker un état de fonctionnement normal, qui est un état de fonctionnement de l'appareil d'inspection aux rayons X (100) et est utilisé pour l'inspection de l'objet ;
- une unité de stockage d'états de réinspection (90) conçue pour stocker un ou plusieurs états de fonctionnement de réinspection, qui sont destinés à être utilisés dans une réinspection dans le cas où l'objet est un produit de mauvaise qualité, et sont différents de l'état de fonctionnement normal ;
- un mécanisme de détection de rayons X (23) pour effectuer une imagerie avec la pluralité de surfaces de détection ;
- une unité d'émission de rayons X (10) pour émettre des rayons X de telle sorte que les rayons X qui ont traversé la région cible d'inspection sont incidents sur le mécanisme de détection de rayons X (23) sur l'une des surfaces de détection ; et
- une unité de commande (70) pour commander le fonctionnement de
l'appareil d'inspection aux rayons X (100),
dans lequel l'unité de commande (70) comprend :
- une unité de détermination (78) conçue pour déterminer si l'objet est un bon produit ou un produit de mauvaise qualité sur la base de l'état de fonctionnement normal ; et
- une unité de commande d'opération d'analyse pour, dans le cas où l'objet est un produit de mauvaise qualité, commuter un état de fonctionnement de l'appareil d'inspection aux rayons X (100) de l'état de fonctionnement normal auxdits un ou plusieurs états de fonctionnement de réinspection, et commander le fonctionnement de l'appareil d'inspection aux rayons X (100) en fonction desdits un ou plusieurs états de fonctionnement de réinspection,
**caractérisé par**
lesdits un ou plusieurs états de fonctionnement de réinspection comprenant un angle de rayonnement de rayons X qui est changé par rapport à un angle de rayonnement de rayons X compris dans l'état de fonctionnement normal.

2. Appareil d'inspection aux rayons X (100) selon la revendication 1, comprenant en outre une unité de déplacement de mécanisme de détection de rayons X (22) pour déplacer le mécanisme de détection de rayons X (23).

3. Appareil d'inspection aux rayons X (100) selon la revendication 1 ou 2, comprenant en outre une unité de déplacement d'objet (110) pour déplacer l'objet.

4. Appareil d'inspection aux rayons X (100) selon l'une quelconque des revendications 1 à 3,
dans lequel lesdits un ou plusieurs états de fonctionnement de réinspection sont chacun prescrits selon un type de défaut devant être réinspecté sur l'objet, et
l'appareil d'inspection aux rayons X (100) dans chacun desdits un ou plusieurs états de fonctionnement de réinspection qui sont basés sur le type de défaut.

5. Appareil d'inspection aux rayons X (100) selon la revendication 3 ou 4, dans lequel, afin que le mécanisme de détection de rayons X (23) acquière une image présentant un rapport d'agrandissement plus élevé que celui d'une image capturée dans l'état de fonctionnement normal, l'unité de commande d'opération d'analyse commande le fonctionnement de l'appareil d'inspection aux rayons X (100) de manière à changer une distance entre le mécanisme de détection de rayons X (23) et l'unité de déplacement d'objet (110) ou une distance entre l'unité d'émission de rayons X (10) et l'unité de déplacement d'objet (110).

6. Appareil d'inspection aux rayons X (100) selon l'une quelconque des revendications 1 à 5,
dans lequel, afin d'acquérir un plus grand nombre d'images que le nombre d'images acquises dans l'état de fonctionnement normal, l'unité de commande d'opération d'analyse commande le fonctionnement de l'appareil d'inspection aux rayons X (100) de manière à réaliser une imagerie à un plus grand nombre de positions que le nombre de positions auxquelles l'imagerie est effectuée dans l'état de fonctionnement normal.

7. Appareil d'inspection aux rayons X (100) selon l'une quelconque des revendications 1 à 6,
dans lequel l'unité de commande d'opération d'analyse commande le fonctionnement de l'appareil d'inspection aux rayons X (100) de manière à changer l'angle de projection des rayons X selon une référence déterminée au préalable en fonction de la cause d'un défaut dans l'objet.

8. Appareil d'inspection aux rayons X (100) selon l'une quelconque des revendications 1 à 7,
dans lequel l'unité de commande d'opération d'analyse commande le fonctionnement de l'appareil d'inspection aux rayons X (100) de manière à changer un trajet de l'objet et du mécanisme de détection de rayons X (23) d'un premier chemin qui a été déterminé au préalable relativement à un état de fonctionnement normal à un second trajet qui a été déterminé au préalable en tant que l'un desdits un ou plusieurs états de fonctionnement de réinspection.

9. Appareil d'inspection aux rayons X (100) selon l'une quelconque des revendications 1 à 8,
dans lequel, afin d'obtenir un contraste plus élevé que le contraste d'une image acquise dans l'état de fonctionnement normal, l'unité de commande d'opération d'analyse commande le fonctionnement du dispositif d'inspection aux rayons X (100) de manière à ajuster une tension de tube, un courant de tube, ou un temps d'exposition sur la base desdits un ou plusieurs états de fonctionnement réinspection.

10. Appareil d'inspection aux rayons X (100) selon l'une quelconque des revendications 1 à 9,
dans lequel l'unité de commande d'opération d'analyse commande le fonctionnement de l'appareil d'inspection aux rayons X (100) de telle sorte que l'imagerie est réalisée avec un diamètre de foyer des rayons X qui a été commuté d'un premier diamètre de foyer qui a été déterminé au préalable en tant que l'état de fonctionnement normal à un second diamètre de foyer qui a été déterminé au préalable en tant que l'un desdits un ou plusieurs états de fonctionnement de réinspection, et est en outre inférieur au premier diamètre de foyer.

11. Appareil d'inspection aux rayons X (100) selon l'une quelconque des revendications 1 à 10, comprenant en outre :
- une unité de reconstruction (76) pour reconstruire une image obtenue
par imagerie par rayons X,
dans lequel l'unité de commande (70) comprend en outre :
- une unité de changement d'algorithme pour changer un algorithme pour reconstruire une image d'un premier algorithme utilisé pour reconstruire une image dans l'état de fonctionnement normal à un second algorithme utilisé pour reconstruire une image dans lesdits un ou plusieurs états de fonctionnement de réinspection.

12. Appareil d'inspection aux rayons X (100) selon l'une quelconque des revendications 1 à 11, comprenant en outre :
- une unité d'affichage (55) pour afficher un résultat concernant un objet déterminé comme étant un produit de mauvaise qualité dans l'état de fonctionnement normal et une image capturée dans lesdits un ou plusieurs états de fonctionnement de réinspection par rapport à une position où l'objet a été déterminé comme étant le produit de mauvaise qualité.

13. Procédé d'inspection aux rayons X pour amener un ordinateur qui fonctionne en tant qu'appareil d'inspection aux rayons X (100) à exécuter un procédé de reconstruction d'une image tomographique d'une région cible d'inspection d'un objet en recevant des rayons X qui ont traversé la région cible d'inspection avec une surface de détection, comprenant les étapes consistant à :
- charger un état de fonctionnement normal utilisé pour inspecter l'objet dans une mémoire de l'ordinateur ;
- charger, dans la mémoire, un ou plusieurs états de fonctionnement de réinspection qui sont destinés à être utilisés dans une réinspection dans le cas où l'objet est un produit de mauvaise qualité, et qui sont différents de l'état de fonctionnement normal, lesdits un ou plusieurs états de fonctionnement de réinspection étant chacun prescrits en fonction d'un type de défaut ciblé pour l'inspection ;
- émettre des rayons X de telle sorte que les rayons X qui ont traversé la région cible d'inspection sont incidents sur un mécanisme de détection de rayons X (23) pour effectuer une imagerie avec la surface de détection à une position d'imagerie ; et - commander le fonctionnement de l'appareil d'inspection aux rayons X (100),
dans lequel l'étape d'opération de commande comprend les étapes consistant à :
- déterminer si l'objet est un bon produit ou un produit de mauvaise qualité sur la base de l'état de fonctionnement normal (S325) ; et
- commuter, dans le cas où l'objet est un produit de mauvaise qualité, un état de fonctionnement de l'appareil d'inspection aux rayons X (100) d'un état de fonctionnement normal à un ou plusieurs états de fonctionnement de réinspection, et commander le fonctionnement de l'appareil d'inspection aux rayons X (100) sur la base desdits un ou plusieurs états de fonctionnement de réinspection (S445, S475, S495, S540),
**caractérisé par**
lesdits un ou plusieurs états de fonctionnement de réinspection comprenant un angle de rayonnement de rayons X qui est changé par rapport à un angle de rayonnement de rayons X compris dans l'état de fonctionnement normal.

14. Procédé d'inspection aux rayons X selon la revendication 13, comprenant en outre l'étape consistant à :
- reconstruire une image obtenue par imagerie par rayons X (S320), dans lequel l'étape d'opération de commande comprend en outre l'étape consistant à :
- changer un algorithme d'un premier algorithme utilisé pour reconstruire une image dans l'état de fonctionnement normal à un second algorithme utilisé pour reconstruire une image dans lesdits un ou plusieurs états de fonctionnement de réinspection.

15. Procédé d'inspection aux rayons X selon la revendication 13 ou 14, comprenant en outre l'étape consistant à :
afficher un résultat concernant un objet déterminé comme étant un produit de mauvaise qualité dans l'état de fonctionnement normal et une image capturée dans lesdits un ou plusieurs états de fonctionnement de réinspection par rapport à une position où l'objet a été déterminé comme étant le produit de mauvaise qualité (S335, S350).
